(19) Europäisches Patentamt / European Patent Office / Office européen des brevets

(11) **EP 2 294 808 B1**

(12) **EUROPEAN PATENT SPECIFICATION**

(45) Date of publication and mention
of the grant of the patent:
**01.05.2013 Bulletin 2013/18**

(21) Application number: **08768642.4**

(22) Date of filing: **20.06.2008**

(51) Int Cl.:
*G06T 5/00* (2006.01)         *H04N 5/21* (2006.01)
*H04N 7/15* (2006.01)

(86) International application number:
**PCT/US2008/007671**

(87) International publication number:
**WO 2009/154596 (23.12.2009 Gazette 2009/52)**

(54) **METHOD AND SYSTEM FOR EFFICIENT VIDEO PROCESSING**

VERFAHREN UND SYSTEM ZUR EFFIZIENTEN VIDEOVERARBEITUNG

PROCÉDÉ ET SYSTÈME DE TRAITEMENT VIDÉO EFFICIENT

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**16.03.2011 Bulletin 2011/11**

(73) Proprietor: **Hewlett-Packard Development Company, L.P.**
**Houston, TX 77070 (US)**

(72) Inventors:
• **KISILEV, Pavel**
  **32000 Haifa (IL)**
• **SCHEIN, Sagi**
  **32000 Haifa (IL)**

(74) Representative: **Rees, Simon John Lewis**
**Haseltine Lake LLP**
**Redcliff Quay**
**120 Redcliff Street**
**Bristol BS1 6HU (GB)**

(56) References cited:
**KR-A- 20010 012 745     KR-A- 20050 013 245**
**KR-A- 20070 036 433     KR-A- 20070 040 026**
**US-A1- 2007 177 817**

• **GUPTA N ET AL: "Temporally-adaptive MAP estimation for video denoising in the wavelet domain", 2006 INTERNATIONAL CONFERENCE ON IMAGE PROCESSING IEEE PISCATAWAY, NJ, USA, 2006, page 4 PP., XP002660182, ISBN: 1-4244-0481-9**
• **YAN CHEN ET AL: "Maximum a Posteriori Based (MAP-Based) Video Denoising VIA Rate Distortion Optimization", MULTIMEDIA AND EXPO, 2007 IEEE INTERNATIONAL CONFERENCE ON, IEEE, PI, 1 July 2007 (2007-07-01), pages 1930-1933, XP031124029, ISBN: 978-1-4244-1016-3**

**Description**

TECHNICAL FIELD

The present invention is related to image processing and, in particular, to an efficient video-processing method and system for applying various processing operations to frames of a video stream, including denoising, sharpening, enhancing, and deblurring a stream of video images.

BACKGROUND OF THE INVENTION

Image processing is currently an important field of technology to which significant research and development efforts are applied. With the increase in availability, and decrease in cost, of various types of video-image capture, transfer, and display devices, including hand-held video cameras, video-conferencing systems, cell phones, and video-distribution channels, including real-time transmission of video images over the Internet, processing of video images is becoming an increasingly important field for research and development and provides an increasingly large market for video-processing systems.

In many applications, video processing can be carried out, following video acquisition and prior to video distribution, by computationally expensive techniques. However, in many current and emerging applications, video processing needs to be carried out quickly and efficiently, such as in real-time video-processing systems. Video conferencing is one example of an application in which real-time video processing can provide enormous benefits. Video-conferencing-equipment manufacturers and vendors have determined that the effectiveness of video conferencing can depend greatly on the quality of video images delivered to video-conference participants. Video quality can be achieved by employing complex and expensive cameras, high-end display systems, significant amounts of dedicated computational hardware, and wide-bandwidth communications channels. Unfortunately, the market for such expensive, high-end video-conferencing systems is relatively small compared to the potential market for lower-cost video-conferencing systems. Researchers and developers, manufacturers and vendors of video conferencing equipment and other systems that need real-time video processing and users of video-conferencing equipment and other such video-based systems have all recognized the need for lower-cost video-based systems in which video-processing components can be used to computationally offset decreases in video-image quality that results from using less-expensive cameras, communications channels, and dedicated hardware.

Gupta et. al, in a paper titled "temporally-adaptive MAP estimation for video denoising in the wavelet domain", published in the proceedings of the IEEE International Conference on Image processing in 2006, disclose a temporally-adaptive maximum a posteriori (MAP) estimation algorithm for the reduction of additive video noise in the wavelet domain.

SUMMARY OF THE INVENTION

Embodiments of the present invention are directed to efficient video processing methods and systems for computationally efficient denoising, sharpening, contrast enhancement, deblurring, and other spatial and temporal processing of a stream of video frames. Embodiments of the present invention separate statistics-related calculations, including estimation of pixel-value-associated variances, standard deviations, noise thresholds, and signal-contrast thresholds, carried out on only a small percentage of video frames selected at a fixed or variable interval from the video stream, from various spatial and temporal processing steps carried out on each frame of the video stream. In certain embodiments of the present invention, the statistics-related calculations are carried out by the general processor or processors of a computer system, while the frame-by-frame spatial and temporal processing is carried out by one or more specialized graphics processors within the computer system.

BRIEF DESCRIPTION OF THE DRAWINGS

Figure 1 illustrates a two-dimensional image signal.
Figure 2 shows the two-dimensional image of Figure 1 with numerical pixel values.
Figures 3A-E illustrate simple examples of various types of image and video-frame processing carried out by method and system embodiments of the present invention.
Figure 4 provides a high-level, block-diagram-like representation of a simple computer system.
Figure 5 illustrates the concept of a neighborhood within an image.
Figures 6A-B illustrate various types of traversals of an image employed in neighborhood-based operations.
Figure 7 illustrates the basic problem addressed by method and system embodiments of the present invention.

Figure 8 illustrates a real-time high-quality video-processing system that represents one embodiment of the present invention.

Figures 9-11 illustrate operation of the noise-and-contrast module of a real-time video-processing system that represents one embodiment of the present invention.

Figure 12 illustrates addition of two images A and B.

Figure 13 illustrates one type of scaling operation, referred to as "downscaling."

Figure 14 illustrates one embodiment of the D operation.

Figure 15 illustrates computation of the weights included in a weight mask W.

Figure 16 illustrates a portion of a Gaussian pyramid obtained by applying the D operation twice to an intermediate-scale image.

Figure 17 illustrates one embodiment of the U operation.

Figure 18 illustrates one embodiment of a robust-filtering operation used in embodiments of the present invention.

Figure 19 illustrates the filter operation $f_s(i,j)$ carried out on each pixel $Y(i,j)$ of an original image $Y$ as part of the robust-filter operation, described above with reference to Figure 18, used in embodiments of the present invention.

Figure 20 illustrates the general form of the non-linear function used in the filter operation $f_s(i,j)$, used in embodiments of the present invention.

Figure 21 illustrates the function $\psi_s$, used in embodiments of the present invention.

Figure 22 shows a number of illustration conventions used in Figure 15.

Figure 23 illustrates one multi-scale robust sharpening and contrast-enhancing method that is employed by the multi-scale denoising, sharpening, and contrast-enhancement module in various embodiments of the present invention.

Figures 24-25 illustrate the computation carried out for each pixel in a currently analyzed frame by the motion-detection module of a real-time video-processing system that represents one embodiment of the present invention.

Figures 26-29 illustrate operation of the adaptive-temporal-processing module of a real-time video-processing system that represents one embodiment of the present invention.

Figure 30 shows a high-level control-flow diagram for embodiments of the real-time video-processing method of the present invention.

Figure 31 provides a control-flow diagram of the noise-and-contrast module of a real-time video-processing system that represents one embodiment of the present invention.

Figure 32 provides a control-flow diagram of the motion-detection module of a real-time video-processing system that represents an embodiment of the present invention.

Figure 33 provides a control-flow diagram for the adaptive-temporal-processing module of a video-processing system that represents one embodiment of the present invention.

## DETAILED DESCRIPTION OF THE INVENTION

Embodiments of the present invention are directed to computationally-efficient real-time video processing. First, a general overview of digital images and digital-image processing is provided, as context for subsequent description of embodiments of the present invention. Then, an overview of a computationally efficient real-time video-processing system that represents one embodiment of the present invention is provided. Components of that system are subsequently discussed, in greater detail. Finally, control-flow diagrams are provided for a video-image processing method that represents one embodiment of the present invention.

Image-Processing Background

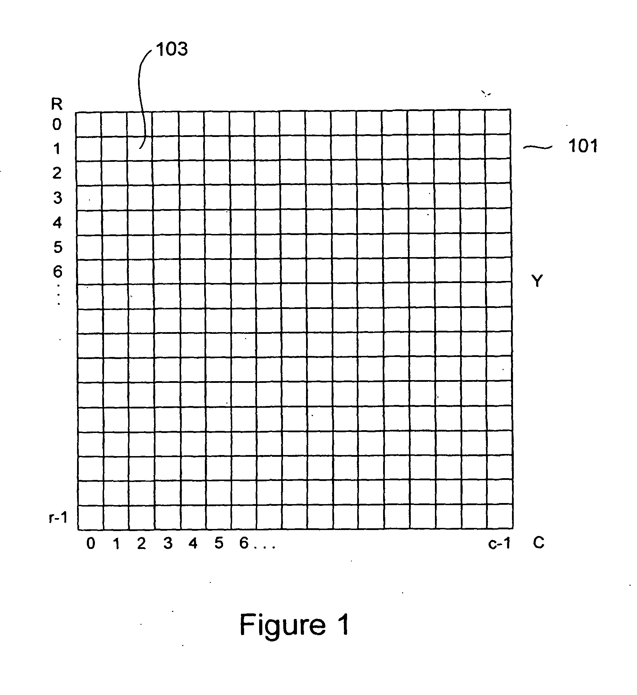

Figure 1 illustrates a two-dimensional image signal. As shown in Figure 1, the two-dimensional image signal can be considered to be a two-dimensional matrix 101 containing $R$ rows, with indices 0, 1, ... , $r$-1, and $C$ columns, with indices 0, 1, ... , $c$-1. In general, a single upper-case letter, such as the letter "$Y$," is used to present an entire image. Each element, or cell, within the two-dimensional image $Y$ shown in Figure 1 is referred to as a "pixel" and is referred to by a pair or coordinates, one specifying a row and the other specifying a column in which the pixel is contained. For example, cell 103 in image $Y$ is represented as $Y(1,2)$.

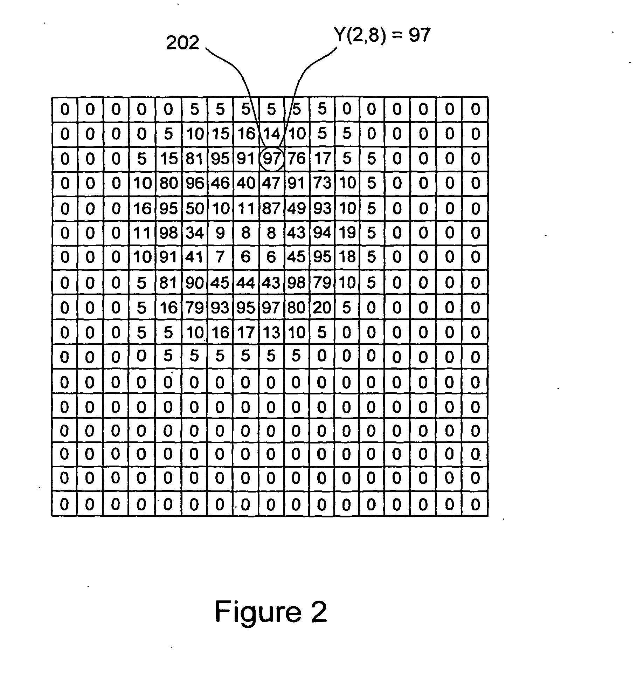

Figure 2 shows the two-dimensional image of Figure 1 with numerical pixel values. In Figure 2, each pixel is associated with a numerical value. For example, the pixel $Y(2,8)$ 202 is shown, in Figure 2, having the value "97." In certain cases, particularly black-and-white photographs, each pixel may be associated with a single, grayscale value, often ranging from 0, representing black, to 255, representing white. For color photographs, each pixel may be associated with multiple numeric values, such as a luminance value and two chrominance values, or, alternatively, three RBG values. In cases in which pixels are associated with more than one value, image-enhancement techniques may be applied separately to partial images, each representing a set of one type of pixel value selected from each pixel. Alternatively, image-enhancement techniques may be applied to a computed, single-valued-pixel image in which a computed value is generated for each pixel by a mathematical operation on the multiple values associated with the pixel in the original image. Alternatively, image-enhancement techniques may be primarily applied to only the luminance partial image. In the following discussion, images are considered to be single-valued, as, for example, grayscale values associated with pixels in a black-and-white photograph. However, the disclosed methods of the present invention may be straightforwardly applied to images and signals with multi-valued pixels, either by separately applying the methods to one or more partial images or by combining the multiple values associated with each pixel mathematically to compute a single value associated with each pixel, and applying the methods of the present invention to the set of computed pixel values. It should be noted that, although images are considered to be two-dimensional arrays of pixel values, images may be stored and transmitted as sequential lists of numeric values, as compressed sequences of values, or in other ways. The following discussion assumes that, however images are stored and transmitted, the images can be thought of as two-dimensional matrices of pixel values that can be transformed by various types of operations on two-dimensional matrices.

A video stream consists of a time-ordered series of video images, referred to below as "frames," each generally separated, in time, from a preceding and following frame by some fixed time interval, such as $\frac{1}{30}$ seconds. Various video-processing methods may be applied to isolated frames, and others may be applied to sequential, time-ordered subsets of frames.

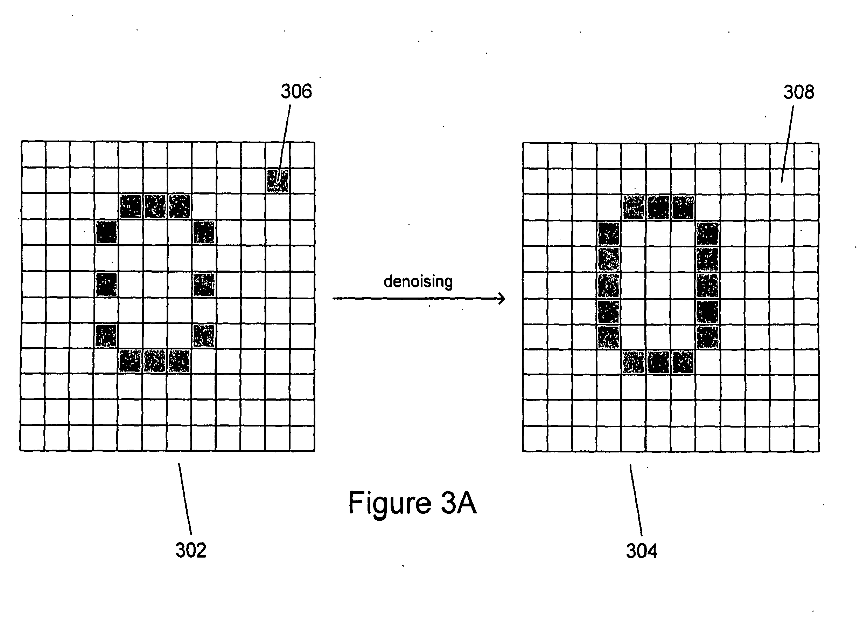

Figures 3A-E illustrate simple examples of various types of video-frame processing carried out by method and system embodiments of the present invention. In each of Figures 3A-E, two very small regions of digital images are shown, one image prior to application of an illustrated processing technique, and the other image following application of the illustrated processing technique, to illustrate various types of processing techniques. One processing technique, shown in Figure 3A, is referred to as "denoising." Denoising refers to a process by which a noisy image 302 is processed in order to substitute context-appropriate grayscale values for pixels with grayscale values inferred to have been altered or distorted by noise introduced during capture, storage, transmission, or prior processing of the digital image. The resulting denoised image 304 ideally appears to be noise free. A denoising process may identify pixels, such as pixel 306 in the noisy image shown in Figure 3A, with grayscale values that significantly depart from surrounding pixels, and replace those pixel values with more appropriate pixel values consonant with surrounding pixel values 308. In certain cases, large pixel values are substituted for smaller pixel values, and, in other cases, smaller pixel values are substituted for larger pixel values. Denoising processes seek to identify and remove noise-introduced artifacts within digital images without removing or altering image features, particularly smaller, high-resolution features and detail that can be easily mistaken for noise by many denoising algorithms.

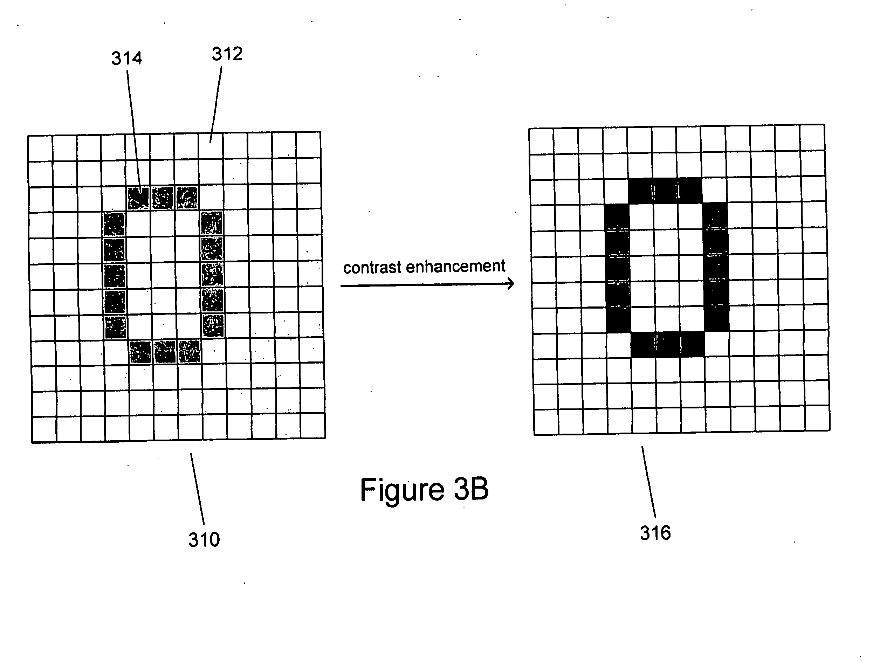

The goal of contrast enhancement, as illustrated in Figure 3B, is to improve the contrast within a digital image. For example, in the low-contrast digital image 310 in Figure 3B, the grayscale values of the background pixels, such as background pixel 312, do not differ greatly from the pixel values of the letter-O-shaped feature 314. Contrast enhancement techniques seek to improve image contrast by, for example, more widely separating the grayscale values of background pixels from the letter-O-shaped feature pixels, as in the enhanced digital image 316. In the enhanced digital image, for example, the background pixels have grayscale values of 255, while the letter-O-shaped feature pixels have grayscale values of 0. Contrast enhancement seeks to provide greater contrast between different image features and between image features and background within an image, while avoiding introduction of spurious artifacts.

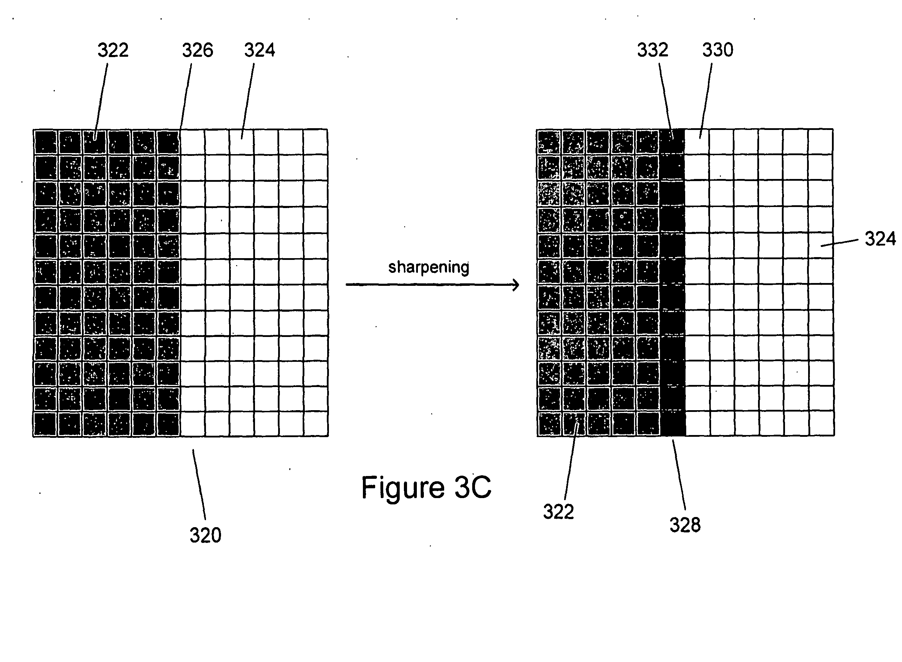

The image-processing technique referred to as "sharpening," illustrated in Fixture 3C, seeks to enhance, or sharpen, boundaries between features and between features and background within an image. For example, in the unsharpened image 320 in Figure 3C, a darker region 322 of the image adjoins a lighter region 324 along a vertical line 326 within the image. One type of sharpening process may enhance or exaggerate the boundary between the darker and lighter regions, as shown in the enhanced image 328, by introducing a lighter column of pixels 330 at the edge of the lighter region 324 and a darker column of pixels 332 at the edge of the darker region 322. Sharpening techniques may additionally straighten linear boundaries and make curved boundaries more continuous.

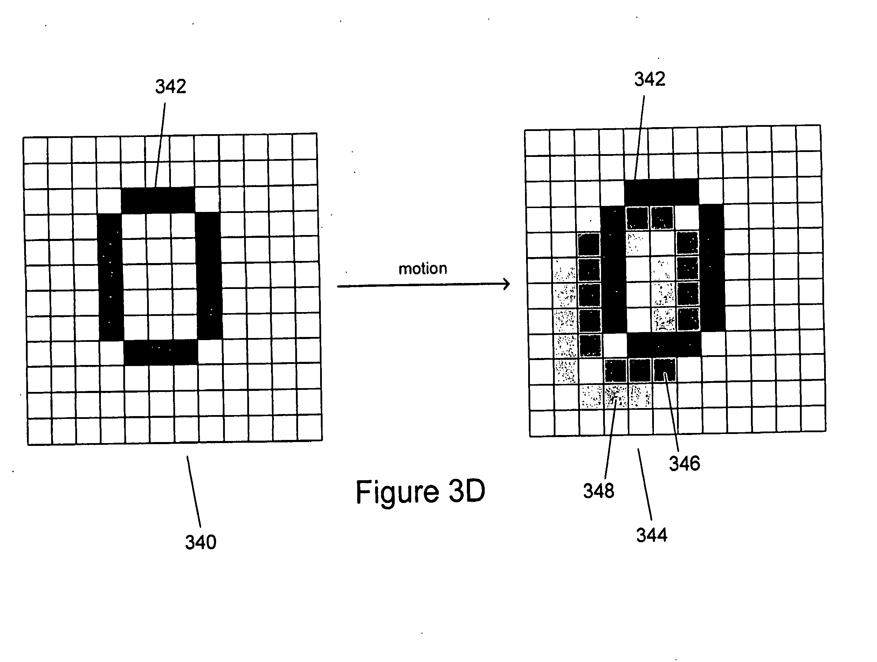

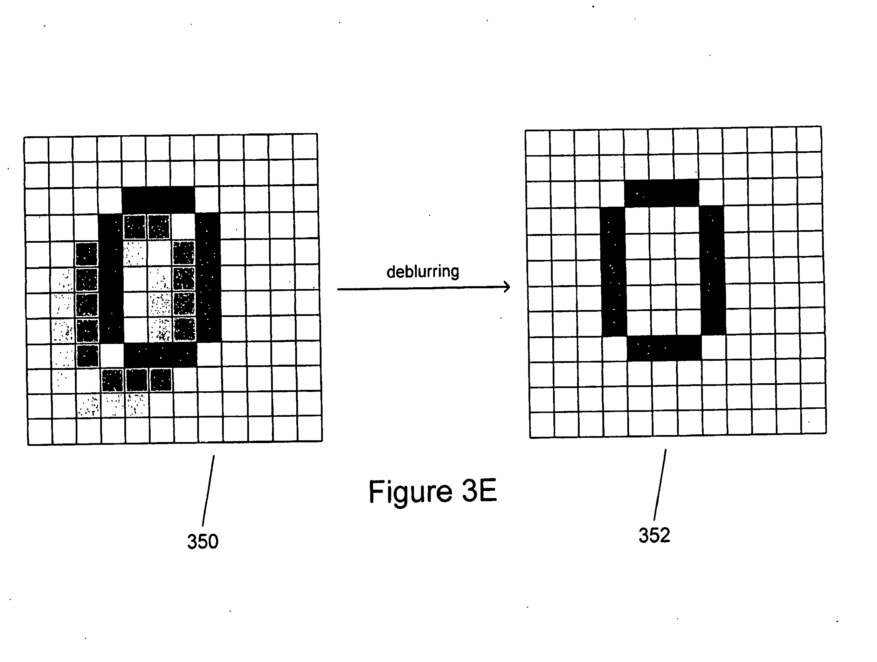

Denoising, contrast enhancement, and sharpening, discussed above with reference to Figures 3A-C, are generally spatial-processing techniques that can be separately applied to each frame of a video stream. In additional to spatial-processing techniques, various temporal-processing techniques may be applied to multiple, sequential, time-ordered frames within a video stream in order to ameliorate motion-induced effects and artifacts, including blurring due to camera motion or object motion against a stationary background. Figure 3D illustrates motion-induced blurring of a digital image. The still image 340 includes a letter-O-shaped feature 342. When camera motion occurs during image capture, motion-induced blurring of the feature may occur in a motion-blurred image 344. Motion-induced blurring generally similarly affects many adjacent pixels within pixel neighborhoods of an image. For example, in the motion-blurred image 344, the letter-O-shaped feature 342 has been diagonally smeared downward, and to the left, producing two additional letter-O-shaped artifacts 346 and 348. All of the darker pixels within pixel neighborhoods including the letter-O-shaped feature show similar, diagonally translated, artifact pixels. While noise often appears to be randomly distributed throughout an image, motion-induced blurring is, by contrast, quite non-random. As shown in Figure 3E, the processing technique referred to as "deblurring" seeks to identify motion-induced artifacts in a blurred image 350 and remove the artifacts systematically to produce a deblurred image 352.

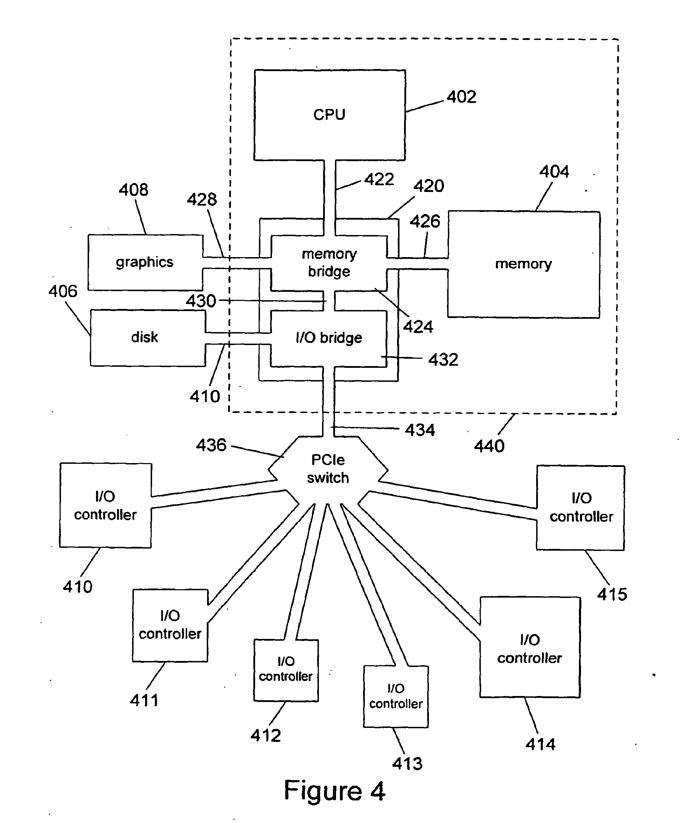

Figure 4 provides a high-level, block-diagram-like representation of a simple computer system. The computer system includes one or more central processing units ("CPUs") 402, system memory 404, an internal disk 406, a graphics-rendering device 408 that includes one or more graphics processing units ("GPUs"), a memory bridge 424, and an I/O bridge 432 interconnected by a processor system bus 422, memory bus 426, advanced graphics port ("AGP") bus 428, an internal host-bridge bus 430, and a dedicated storage-device communications link, such as a SATA link. The I/O bridge 432 serves to interconnect additional devices to the memory bridge 424, and therefore to the memory 404 and CPU 402. The I/O bridge 432 and memory bridge 424 together compose a host bridge 420. The I/O bridge includes PCIe ports and a multi-lane interconnection to a PCIe switch 436 which serves as a crossbar-like switch for establishing point-to-point interconnection between the I/O bridge and the various PCIe end points 410-415. A computer system, such as that shown in Figure 4, is an exemplary platform for a real-time video-processing system representing an embodiment of the present invention.

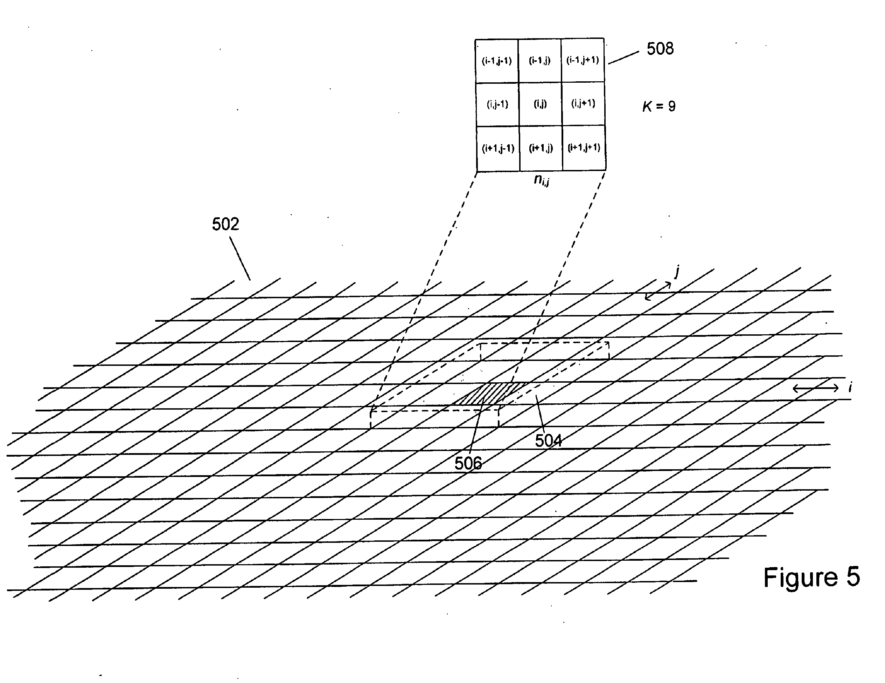

Figure 5 illustrates the concept of a neighborhood within an image. Many image-processing techniques are based on the mathematical concept of a pixel neighborhood. In Figure 5, a portion of a large image is shown as a grid 502. Within the illustrated portion of the image, a small square region 504 is shaded, and the central pixel of the shaded region additionally crosshatched 506. For many operations, a square region with sides having an odd number of pixels provides a convenient neighborhood for calculation. In many cases, the square region 504 is considered to be the neighborhood of the central pixel 506. In Figure 5, the central pixel 506 has indices $(i,j)$. This neighborhood may be referred to as $n(i,j)$. The indices of all of the pixels within the neighborhood are shown in the inset 508. Neighborhoods may have different types of shapes, including diamond shapes, approximately disk-like shapes, and other shapes. In the following discussion, the number of pixels in a neighborhood is generally represented by the letter "$K$." For some operations, the central pixel value is considered to be one of $K$ pixels within the neighborhood. In other cases, the central pixel value is not employed in a particular neighborhood-based process, and therefore the constant K may not include the central pixel. For example, for those operations that do not use the central-pixel value, $K$ may be considered to have the value 8 for neighborhood 508 in Figure 5, and, for those operation that do use the central-pixel value, $K$ may be considered to have the value 9 for neighborhood 508 in Figure 5. The term "window" may also be used to describe a pixel neighborhood.

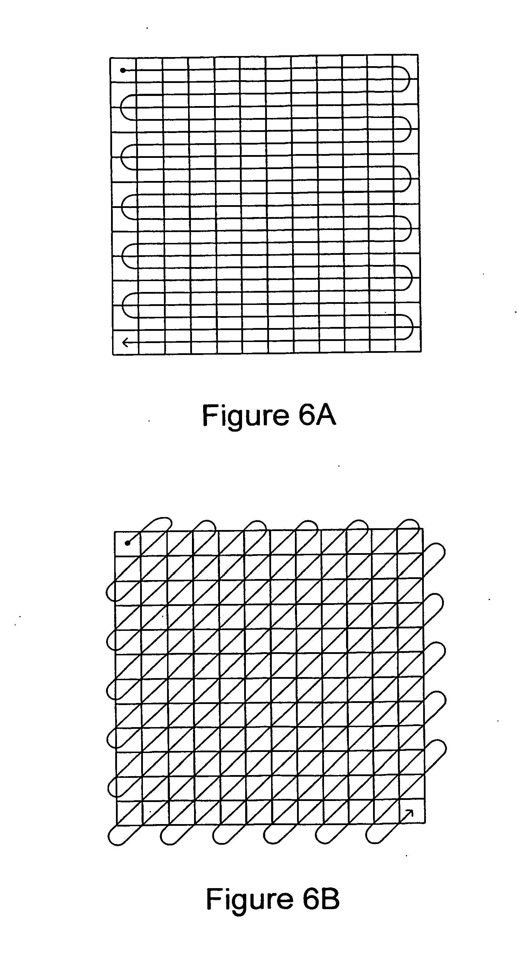

Figures 6A-B illustrate various types of traversals of an image employed in neighborhood-based operations. Often, a neighborhood-based calculation is carried out for each pixel in the image. Thus, the neighborhood can be envisioned as a window that slides along a traversal path within the image, stopping at each position along the traversal path, with a different central pixel at each position along the traversal path. Figure 6A illustrates one possible traversal path, in which rows are traversed in order, with the pixels in each row traversed in a direction opposite from the traversal of the preceding and subsequent rows. Alternatively, a diagonal traversal may be carried out, as shown in Figure 6B. For pixels close to edges, modified neighborhoods may be employed in order to carry out neighborhood-based computations for pixels close to edges or corners. Convolution operations, in which a small mask of values multiplies a corresponding neighborhood about each pixel to generate each pixel value of an image produced by convolution, and filter operations, in which computations are made based on the pixel values for each neighborhood along traversal path, such as those shown in Figures 6A-B, are both examples of neighborhood-based operations.

## Overview of Embodiments of the Present Invention

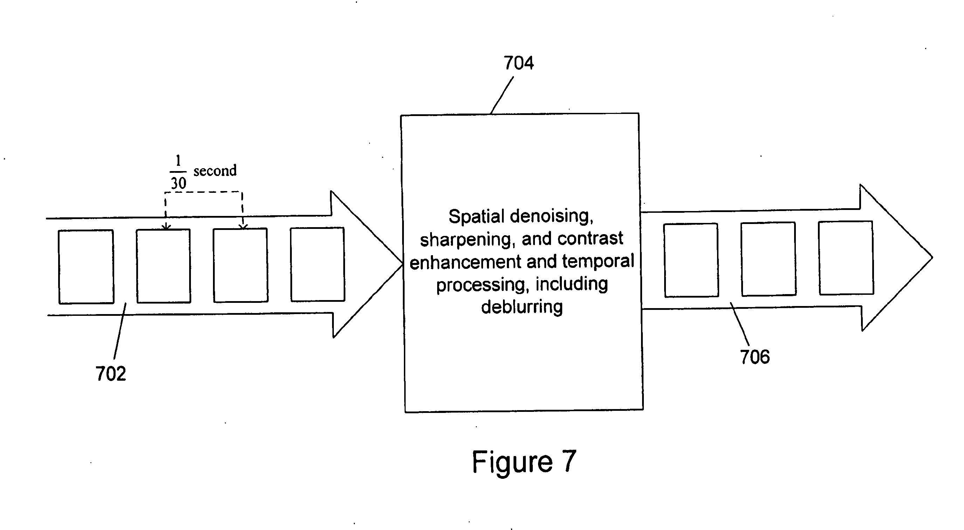

Figure 7 illustrates the basic problem addressed by method and system embodiments of the present invention. As shown in Figure 7, a stream of video images comprising a video signal 702 is input to a real-time video-processing system 704, which needs to, in real time, carry out spatial operations, including denoising, sharpening, and contrast enhancement, on each frame as well as to carry out temporal processing, including deblurring, on time-ordered subsets of the video stream in order to produce a processed video stream 706. Even a relatively low-resolution video stream, in which each frame has a size of 720 x 480 pixels and adjacent frames are separated by a time interval of $\dfrac{1}{30}$ seconds, comprises over 10,000,000 pixels that must be processed each second by the video-processing system 704. However, various different spatial and temporal processing techniques may require each pixel to be accessed multiple times, and may require transfer of pixel values among various different buffers and data structures, further compounding the rather large computational overhead of a real-time video-processing system. For many currently available personal computers and workstations, the processing bandwidth available in the one or more central processing units ("CPUs") within the personal computer or workstation is insufficient to carry out the high-quality, multi-step processing needed to produce high-quality video by inexpensive video-conferencing systems and other types of video-processing-based systems.

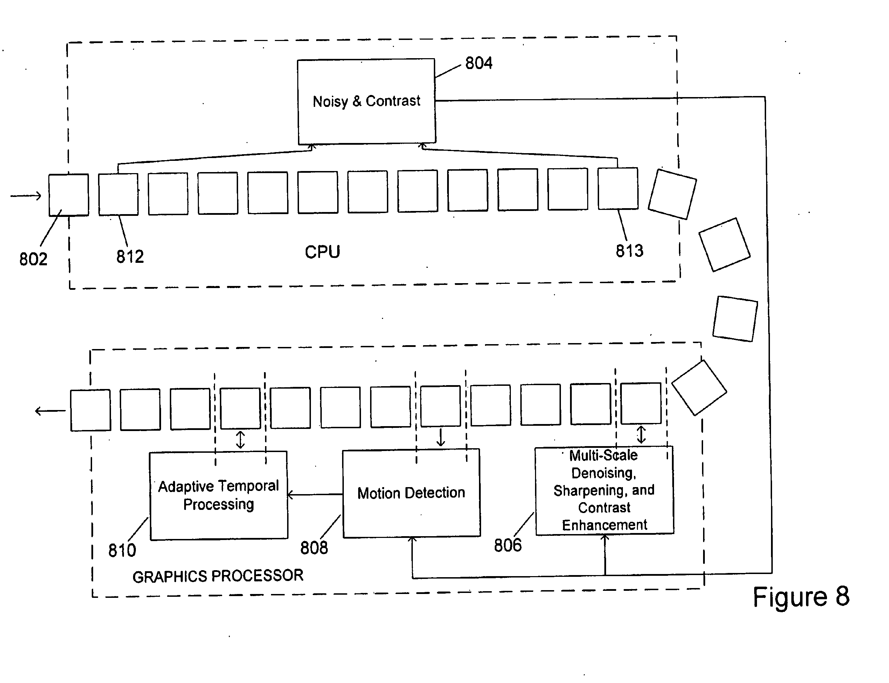

Figure 8 illustrates a real-time high-quality video-processing system that represents one embodiment of the present invention. In Figure 8, the video stream is represented by a sequence of frames, including frame 802. The real-time video-processing system that represents one embodiment of the present invention includes a noise-and-contrast module 804 executed by one or more CPUs of an underlying computer system or work station, and three modules 806, 808, and 810 that are executed by one or more special graphical processing units ("GPUs") within the computer system or work station. The three modules executed by the one or more GPUs include: (1) a multi-scale denoising, sharpening, and contrast-enhancement module 806; (2) a motion-detection component 808; and (3) an adaptive-temporal-processing module 810. As shown in Figure 8, the noise-and-contrast module 804 operates on only a few, selected frames, for example frames 812 and 813 in Figure 8, that occur at either a fixed or variable time or frame interval within the video stream. The noise-and-contrast module produces results that are often relatively constant over reasonably large stretches of frames. Moreover, the calculations performed by the noise-and-contrast module are generally less well-suited for execution on the one or more GPUs of an underlying computer system or device. These calculations involve specialized, complex, sequentially programmed routines that do not generally access memory in regular or predictable patterns, such as storing entire two-dimensional arrays. Moreover, the calculations are difficult and impractical to decompose into smaller tasks that can be executed in parallel, and generally do not make use of the specialized, image-based vector and matrix primitives provided by GPUs. There is, in other words, relatively low opportunity, in these calculations, for effectively taking advantage of the parallel, dedicated-primitive-based interface provided by a GPU. The three modules that execute on the one or more GPUs operate on each frame of the video stream. In contrast to the calculations performed by the noise-and-contrast module on the one or more CPUs, the calculations carried out on the one or more GPUs by the multi-scale denoising, sharpening, and contrast-enhancement module, the motion-detection component, and the adaptive-temporal-processing module are image-based calculations that are suited for parallel vector and matrix operations, as well as high-bandwidth and highly regular memory-access operations, for which GPUs are designed. By carrying out the sequential computations of the noise-and-contrast module on the one or more CPUs, and carrying out the image-based, parallelizable operations of the multi-scale denoising, sharpening, and contrast-enhancement module, the motion-detection component, and the adaptive-temporal-processing module on the one or more GPUs, the over-all processing bandwidth of the computer system is best exploited, in a parallel fashion, and those calculations are distributed among the CPUs and GPUs so take advantage of the different capabilities of, and interfaces to, the CPUs and GPUs. In one embodiment of the present invention, the three modules are discrete, and operate on video frames in assembly-line fashion. In alternative embodiments, all three modules may be implemented together as a single module.

The noise-and-contrast module is one embodiment of a measurement module that carries out statistical analysis of selected video frames in order to provide parameter values for subsequent spatial and temporal processing. The multi-scale denoising, sharpening, and contrast-enhancement module, motion-detection component, and adaptive-temporal-processing module together comprise one embodiment of a processing module that operates on each video frame to produce a corresponding processed video frame by various methods, including removing noise, enhancing contrast, sharpening features, and deblurring video frames.

As shown in Figure 8, the noise-and-contrast module 804 produces results, namely grayscale-value-associated estimated noise-related variances or standard deviations and signal-contrast-related variances that are input to both the multi-scale denoising, sharpening, and contrast-enhancement module 806 and the motion-detection module 808. The motion-detection module 808 produces values that are input to the adaptive-temporal-processing module 810. The noise-and-contrast module 804 and the motion-detection module 808 do not alter video frames, but the multi-scale denoising, sharpening, and contrast-enhancement module 806 and the adaptive-temporal-processing module 810 both alter the content of each video frame in the video stream. The multi-scale denoising, sharpening, and contrast-enhancement module 806 carries out spatial processing of video frames, as discussed with respect to Figures 3A-C, and the adaptive-temporal-processing module 810 carries out temporal processing, including deblurring, as discussed above with reference to Figures 3D-E. The enhanced frames output by the adaptive-temporal-processing module can then be transmitted, stored, and rendered for display by various types of systems that include or interface with the real-time video-processing systems of the present invention.

Noise-and-Contrast Module

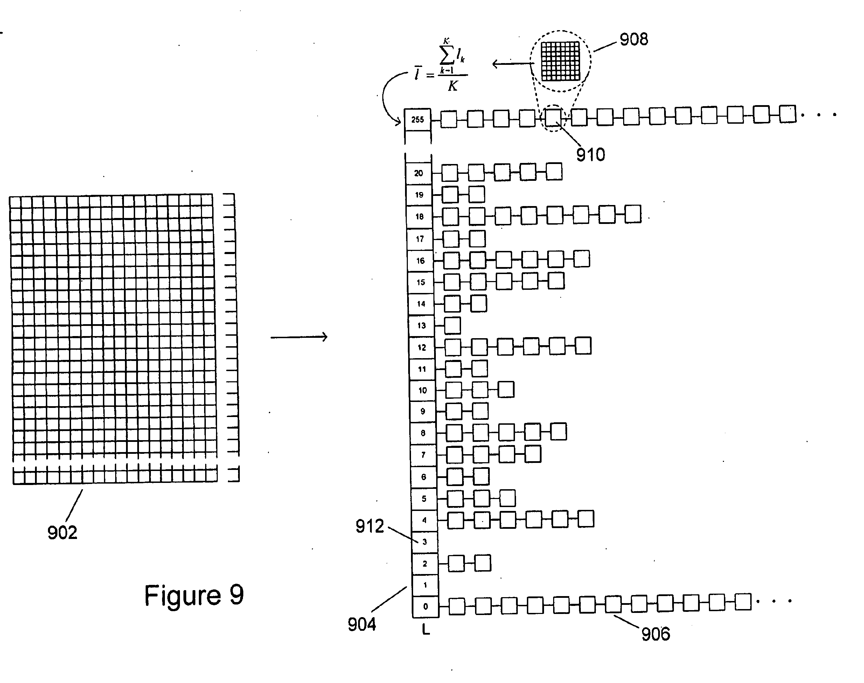

Figures 9-11 illustrate operation of the noise-and-contrast module of a real-time video-processing system that represents one embodiment of the present invention. The noise-and-contrast module (804 in Figure 8) represents, as discussed above, an embodiment of a measurement module. Beginning with Figure 9, the noise-and-contrast module is shown to operate on a selected video frame 902 in order to produce a number of statistical functions related to the video frame. First, the video frame is partitioned into small blocks of pixels. In certain embodiments of the present invention, 8 x 8 blocks of pixels are employed, the 8 x 8 blocks fully tiling the video frame. In alternative embodiments, differently sized blocks may be employed, and a smaller number of blocks than a tiling set may be used to compute the statistical functions. An average grayscale value, or pixel value, for each block is computed as:

$$\bar{l} = \frac{\sum_{k=1}^{K} l_k}{K}$$

where
$\bar{l}$ is the average pixel value for a block containing K pixels; and
$l_k$ is the pixel value for the $k^{th}$ pixel.
The blocks are then partitioned according to average pixel value. In Figure 9, partitions are created for each of the 256 grayscale values 904, shown, for illustration purposes, as linked lists of blocks, such as linked list 906, each referenced from an array of the 256 possible pixel values. Inset 908 illustrates that each block of each partition, such as block 910 in the partition associated with pixel value "255,", is, in the described embodiment, an 8 x 8 block of pixels, and that the average grayscale value computed for the block indexes the partition in which the block is included. Note that it may be the case that certain, particular pixel values, such as the pixel value "3" 912, have empty partitions, when no 8 x 8 block within the frame has an average pixel value equal to the particular pixel values.

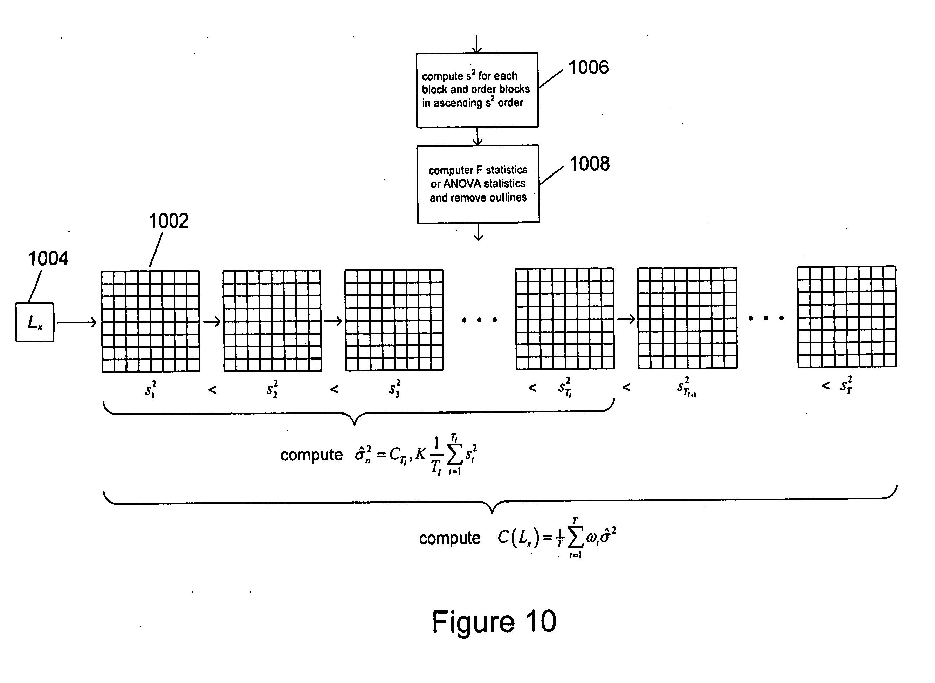

Figure 10 illustrates processing each partition of 8 x 8 blocks by the noise-and-contrast module, according to one embodiment of the present invention. In Figure 10, a single partition, represented as a list of 8 x 8 blocks, such as 8 x 8 block 1002, are associated with some particular grayscale value $L$ 1004. As discussed above, all of the 8 x 8 blocks in the partition associated with grayscale value $L$ have an average pixel value of $L$. In a first step of partition processing, the sample variance $s^2$ is computed for each 8 x 8 block, and the 8 x 8 blocks are ordered in ascending $s^2$ order 1006. The sample variance is computed as:

$$s^2 = \frac{1}{K-1} \sum_{k=1}^{K} \left( l_k - \bar{l} \right)^2$$

In a next step 1008, F statistics or ANOVA statistics are computed for the 8 x 8 blocks in order to remove from the partition any blocks with outlying $s^2$ values. Next, a number of the initial blocks in the ordered list, having lowest sample variance, are employed to compute an estimated variance $\hat{\sigma}_n^2$ from a number $T_l$ of low-sample-variance blocks, as follows:

$$\hat{\sigma}_n^2 = C_{T_l,K} \frac{1}{T_l} \sum_{t=1}^{T_l} s_t^2$$

where
$T_l$ is a number of low-sample-variance blocks;

$s_t^2$ is the sample variance of a block of K elements; and

$C_{T_l,K}$ is a constant of the form $\left( 1 + \alpha_{t,T_l} \sqrt{\frac{2}{K-1}} \right)^{-1}$

where $\alpha_t$ is a tabulated $t^{th}$ order statistic from a standard normally distributed population of size $T_l$.

The number of low-sample-variance blocks, $T_l$, used to compute the estimated variance $\hat{\sigma}_n^2$ may be a fixed number, or may vary depending on partition size and other considerations, in alternative embodiments of the present invention. For partitions with an insufficient number of blocks to compute $\hat{\sigma}_n^2$, due to $T_l$ being too small for meaningful $\alpha_t$ statistics, the calculation is not performed. Blocks with low sample variance have a high probability of being featureless, and therefore the estimated variance $\hat{\sigma}_n^2$ is a reflection of the noise level within a partition of blocks.

Next, a weighted average of the estimated variances for all the blocks, $\hat{\sigma}_w^2$, is computed as follows:

$$\hat{\sigma}_w^2 = \frac{1}{T}\sum_{t=1}^{T} w_t \hat{\sigma}_t^2$$

where
$w_t$ is a weight for sample $t$.
This average estimated variance, for all 8 x 8 blocks in the partition, is related to signal contrast within the blocks of the partition.
As a result of the above-described processing of each partition, the noise-and-contrast module may determine, for each partition, the low-sample-variance-block variance, $\hat{\sigma}_n^2$, the related standard deviation, $\hat{\sigma}_n$, and the weighted-average estimated variance, $\hat{\sigma}_w^2$, for those partitions with a sufficient number of blocks to compute these values. The set of each of these statistics, collected for all of the partitions, represents, in the case of each statistic, an incomplete, discrete statistical function of the statistic with respect to pixel value.

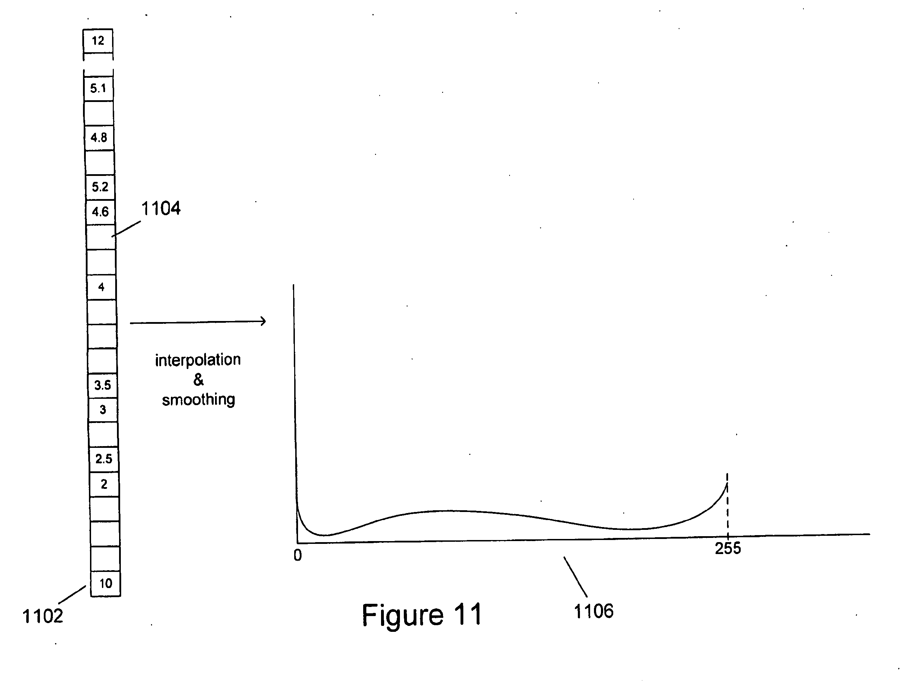

Figure 11 illustrates conversion of an incomplete discrete function of a statistic with respect to pixel value into a statistical function. As discussed above, each of the statistics $\hat{\sigma}_n^2$, $\hat{\sigma}_n$, and $\hat{\sigma}_w^2$ is computed, for those partitions with a sufficient number of blocks to compute reasonable statistical values, by the noise-and-contrast module. For each of these statistics, an incomplete, discrete function 1102 is obtained. The incomplete, discrete function generally includes a number of undefined range values, such as undefined range values 1104, for those pixel values associated with no partition or with partitions with an insufficient number of blocks to compute the statistic. Using any of various, well-known interpolation and smoothing procedures, the incomplete, discrete function 1102 can be converted into a smoothed, complete statistical function 1106. The complete statistical function 1106. is shown as a continuous function, in Figure 11, although the interpolated and smoothed function is generally a discrete function, represented in table or vector form. Thus, as a result of processing of a frame, as discussed above with reference to Figures 9-11, the noise-and-contrast module produces either or both of the functions $\hat{\sigma}_n^2(L)$ and $\hat{\sigma}_n(L)$ as well as the function $\hat{\sigma}_w^2(L) = C(L)$.

These statistical functions are employed subsequently by the remaining modules of a real-time video-processing system that represents one embodiment of the present invention in order to compute noise threshold values and contrast threshold values used in subsequent calculations. For example, the multi-scale denoising, sharpening, and contrast-enhancement module (806 in Figure 8) uses two noise thresholds, for each grayscale level, including a lower threshold related to the estimated standard deviation:

$$T_l = m\hat{O}_n(L)$$

where
$m$ is a constant; and
$L$ is a pixel value.
and an upper threshold:

$$T_u = pq\hat{O}_n(L)$$

where
$p$ is a constant; and
$q$ = skewness of the sample distribution.
Note that the skewness of a sample distribution $q$ may be computed from $n$ samples for which the values x are measured as follows:

$$q = \left( \frac{\sqrt{n(n-1)}}{n-2} \right) \left( \frac{\sqrt{n} \sum_{i=1}^{n} (x_i - \bar{x})^3}{\left( \sum_{i=1}^{n} (x_i - \bar{y})^2 \right)^{3/2}} \right)$$

The skewness $q$ may be computed for each partition, thus representing yet an additional statistical function $q$ (L), or may be computed over the entire frame.

**Multi-Scale Denoising, Sharpening, and Contrast-Enhancement Module**

Next, the multi-scale denoising, sharpening, and contrast-enhancement module is described. In the following subsections, a number of different types of operations carried out on two-dimensional images are described. These operations range from simple numeric operations, including addition and subtraction, to convolution, scaling, and robust filtering. Following a description of each of the different types of operations, in separate subsections, a final subsection discusses a multi-scale denoising, sharpening, and contrast-enhancement method carried out by the multi-scale denoising, sharpening, and contrast-enhancement module according to embodiments of the present invention..

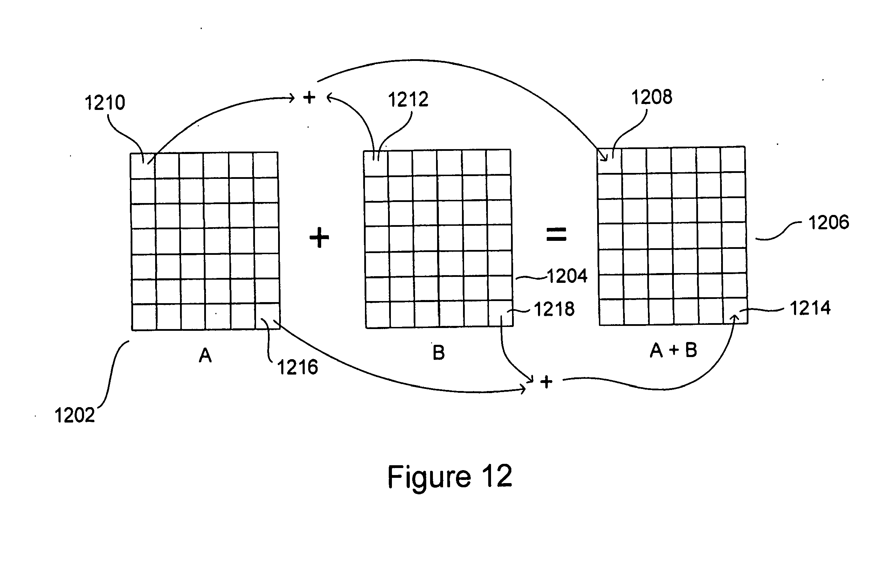

Figure 12 illustrates addition of two images $A$ and $B$. As shown in Figure 12, addition of image $A$ 1202 and image $B$ 1204 produces a result image A+B 1206. Addition of images is carried out, as indicated in Figure 12, by separate addition of each pair of corresponding pixel values of the addend images. For example, as shown in Figure 12, pixel value 1208 of the result image 1206 is computed by adding the corresponding pixel values 1210 and 1212 of addend images $A$ and $B$. Similarly, the pixel value 1214 in the resultant image 1206 is computed by adding the corresponding pixel values 1216 and 1218 of the addend images $A$ and $B$. Similar to addition of images, an image $B$ can be subtracted from an image $A$ to produce a resultant image $A - B$. For subtraction, each pixel value of $B$ is subtracted from the corresponding pixel value of $A$ to produce the corresponding pixel value of $A - B$. Images may also be pixel-by-pixel multiplied and divided.

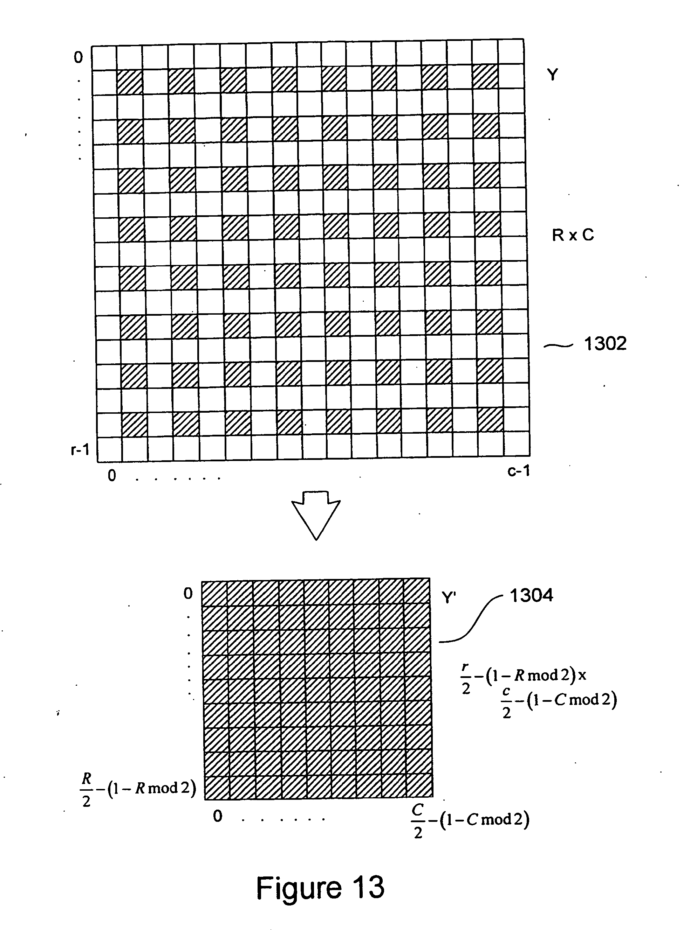

Figure 13 illustrates one type of scaling operation, referred to as "down scaling." As shown in Figure 13, a first, original image $Y$ 1302 may be downscaled to produce a smaller, resultant image $Y'$ 1304. In one approach to downscaling, every other pixel value, shown in original image $Y$ in Figure 13 as crosshatched pixels, is selected and combined together with the same respective positions in order to form the smaller, resultant image $Y'$ 1304. As shown in Figure 13, when the original image $Y$ is a $R$ x C matrix, then the downscaled image $Y'$ is an

$$\left[ \frac{R}{2} - (1 - R \bmod 2) \right] \times \left[ \frac{C}{2} - (1 - C \bmod 2) \right]$$ image. The downscaling shown in Figure 13 decreases each dimension of the original two-dimensional matrix by an approximate factor of ½, thereby creating a resultant, downsized image $Y'$ having ¼ of the number of pixels as the original image $Y$. The reverse operation, in which a smaller image is expanded to produce a larger image, is referred to as upscaling. In the reverse operation, values need to be supplied for ¾ of the pixels in the resultant, larger image that are not specified by corresponding values in the smaller image. Various methods can be used to generate these values, including computing an average of neighboring pixel values, or by other techniques. In Figure 13, the illustrated downscaling is a ½ x ½ downscaling. In general, images can be downscaled by arbitrary factors, but, for convenience, the downscaling factors generally select, from the input image, evenly spaced pixels with respect to each dimension, without leaving larger or unequally-sized boundary regions. Images may also be downscaled and upscaled by various non-linear operations, in alternative types of downscaling and upscaling techniques.

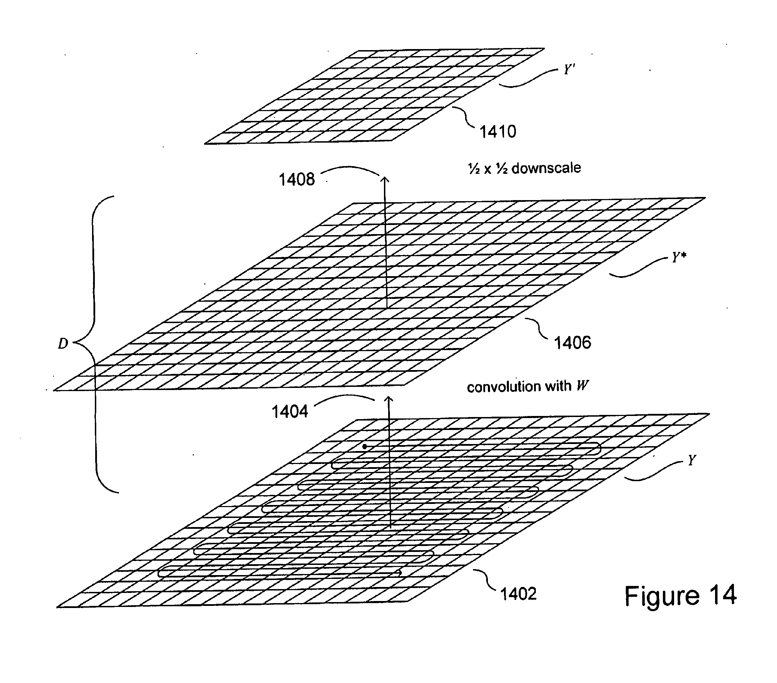

Figure 14 illustrates one embodiment of the $D$ operation. The $D$ operation is a logical combination of two simple operations. An original two-dimensional image, or signal, $Y$ 1402 is first convolved with a weight mask $W$ 1404 to produce a filtered, resultant image $Y^*$ 1406. This intermediate-result matrix $Y^*$ is then downscaled by a ½ x ½ downscale operation 1408 to produce a final resultant image $Y'$ 1410.

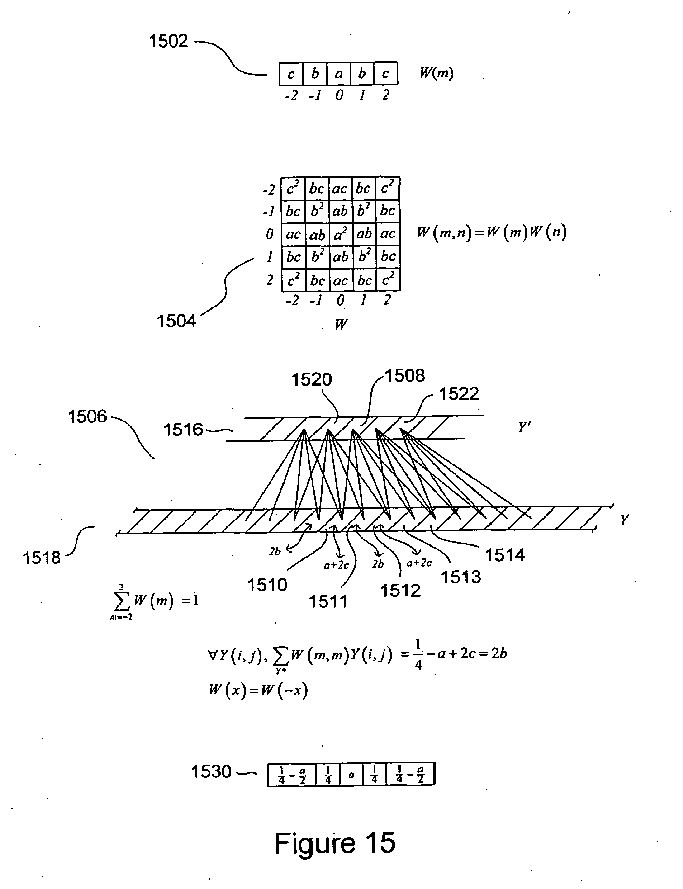

Figure 15 illustrates computation of the weights included in the weight mask $W$. A one-dimensional mask $W$ $(m)$ 1502, where m = 5, is shown in Figure 15 to include three numeric values $a$, $b$, and $c$. The one-dimensional weight mask 1502 is symmetric about the central element, with index 0, containing the value $a$. The two-dimensional weight mask $W(m,m)$ can be generated by a matrix-multiplication-like operation in which a row vector $W(m)$ is multiplied by a column vector $W(m)$ to generate the two-dimensional weight matrix $W$ 1504. Considering the $D$ operation, discussed with reference to Figure 14, in a one-dimensional case 1506, each pixel of the resultant image $Y'$, such as pixel 1508, is produced, via the one-dimensional mask 1502, by a linear combination of five pixels in the original image *Y*, pixels 1510-1514 in the case of resultant-image pixel 1508. In Figure 15, lines are drawn, for a number of pixels within a row 1516 of the resultant image *Y'*, connecting the pixels with the corresponding pixels in a row 1518 of the original image *Y* that contribute values to each of the pixels in the resultant image *Y'*. Using the one-dimensional mask 1502, it is apparent that original-image pixel values 1510 and 1514 are both multiplied by value *c*, original-image pixel values 1511 and 1513 are both multiplied by the value *b*, and the pixel value 1512 of the original image *Y* is multiplied by the value *a* in the masking operation that produces the pixel value 1508 of the resultant image *Y'*. Because of the downscale-operation-component of the operation *D*, every other pixel in the original image *Y* serves as the central pixel in a masking operation to produce corresponding pixel value in *Y'*. Thus, original-image pixel 1512 is the central pixel of a mask operation leading to resultant-image *Y'* pixel value 1508. However, original-image-pixel 1512 also contributes to resultant-image-pixel values 1520 and 1522, in each case multiplied by value c. Thus, pixel 1512 of the original image represents a first type of original-image pixel that is used in three different individual mask operations to contribute to the values of three different resultant-image pixels, once multiplied by the value *a* and twice multiplied by the value *c*. However, the neighboring original-image pixels 1511 and 1513 each represent a second type of original-image pixel that is used only twice in masking operations to contribute to the values of two resultant-image pixels, in both cases multiplied by the value *b*. As shown in Figure 15, these two different types of pixels alternate along the illustrated dimension of the original image.

As shown in Figure 15, there are three constraints applied to the weight values within the weight matrix *W*. First, the weights are normalized in each dimension:

$$\sum_{m=-2}^{2} W(m) = 1$$

A second constraint is that each pixel of the original image contributes ¼ of its value to the resultant image, or:

$$\forall Y(i,j), \sum_{Y'} W(m,m)Y(i,j) = \frac{1}{4}(Y(i,j))$$

where the sum is over all pixels of *Y'* to which original-image pixel *Y(i,j)* contributes. A final constraint is that, in each dimension, the weight mask is symmetric, or:

$$W(x) = W(-x)$$

Applying these constraints, a one-dimensional weight matrix *W(m)* with m=5 that meets these constraints 1530 includes the following values expressed numerically in terms of the value *a*:

$$a = a$$

$$b = \frac{1}{4}$$

$$c = -\frac{a}{2}$$

where the value *a* is selectable, as a parameter, from values greater than 0 and less than 1.

The weight matrix W is an approximate Gaussian filter. In other words, *a* is significantly greater than b, and b, in turn, is somewhat greater than c. In the one-dimensional case, the weight values approximately correspond to a Gaussian, bell-shaped curve. In the two-dimensional case, the values of the weight matrix approximately correspond to a. two-dimensional, rounded Gaussian peak. In one embodiment of the present invention, the 5 x 5 weight mask *W* shown in Figure 15 is used in the *D* operation, as well as in a corresponding *U* operation, discussed below. In alternative embodiments, weight masks with larger or smaller dimensions may be employed, with different weights that approximate different, alternative types of curves.

Convolution of a Gaussian weight mask with an image produces a smoothed image. Extreme pixel values in an original image are altered to better correspond with the values of their neighbors. A smoothing filter thus tends to remove noise and high-contrast artifacts.

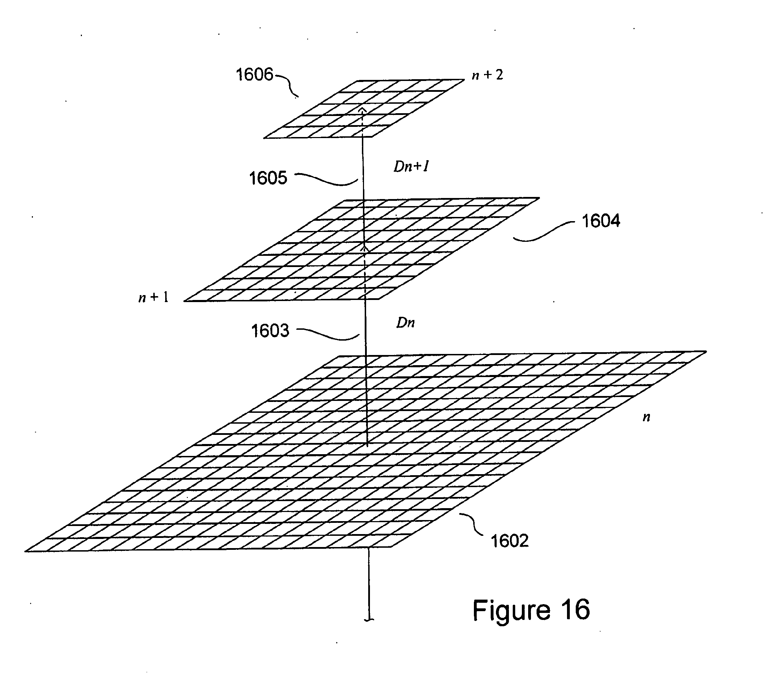

The *D* operations, described above with reference to Figures 14 and 15, can be successively applied to an original image to produce a succession of resultant images with successively increasing scales, or decreasing resolutions. Figure 16 illustrates a portion of a Gaussian pyramid obtained by applying the *D* operation twice to an intermediate-scale image. In Figure 16, a first *D* operation, $D_n$ 1603, is applied to an intermediate-scale image 1602 to produce a smaller, lower-resolution image 1604 at scale $n+1$. A second *D* operation, $D_{n+t}$ 1605, is applied to this lower-resolution image 1604 produces a still lower-resolution image 1606 at scale $n + 2$.

Alternative *D* operations that comprise only linear downscaling by sub-sampling may be used, rather than the above-described *D*-operation embodiment. In yet additional, alternative *D* operations, a non-linear operation may be employed.

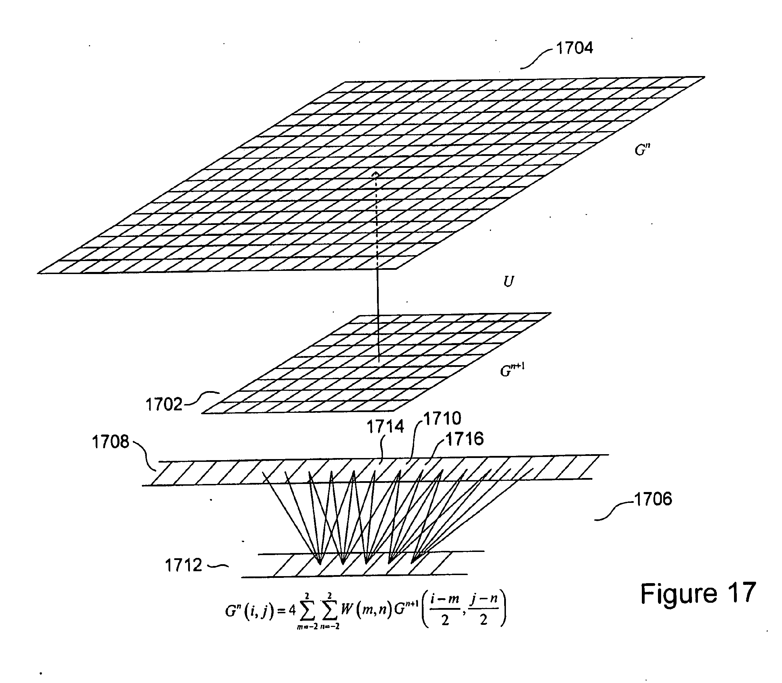

The *U* operation is complementary to, or opposite from, the *D* operation described in the previous subsection. Figure 17 illustrates one embodiment of the *U* operation. As shown in Figure 17, the *U* operation transforms a lower-resolution, smaller image, $G^{n+t}$ 1702, at scale $n+1$ to a larger, higher-resolution image, $G^n$ 1704, at scale $n$. The *U* operation is shown 1706 in the one-dimensional case as essentially the reverse of the *D* operation discussed above (1506 in Figure 15). In the resultant, larger image, one row or column 1708 of which is shown in Figure 17, the value of every other pixel, such as pixel 1710, is contributed to by the values of three pixels in the lower-resolution, smaller image 1712, while the values of adjacent pixels, such as pixels 1714 and 1716, are contributed to by the values of only two pixels within the lower-resolution image 1712. The *U* operation can be expressed as:

$$G^n \left( i, j \right) = 4 \sum_{m=-2}^{2} \sum_{n=-2}^{2} W \left( m, n \right) G^{n+1} \left( \frac{l-m}{2}, \frac{j-n}{2} \right)$$

where only integral values of $\dfrac{i-m}{2}$ and $\dfrac{j-n}{2}$ are used.

Alternative *U* operations that comprise only linear upscaling by sub-sampling with linear or non-linear interpolation may be used, rather than the above-described *U*-operation embodiment. In yet additional, alternative *U* operations, a non-linear operation may be employed.

Robust filtering is a rather complex operation performed on an original image *Y* to produce a resultant image $\hat{Y}$ where:

$$\hat{Y} = \Psi \left( Y \right)$$

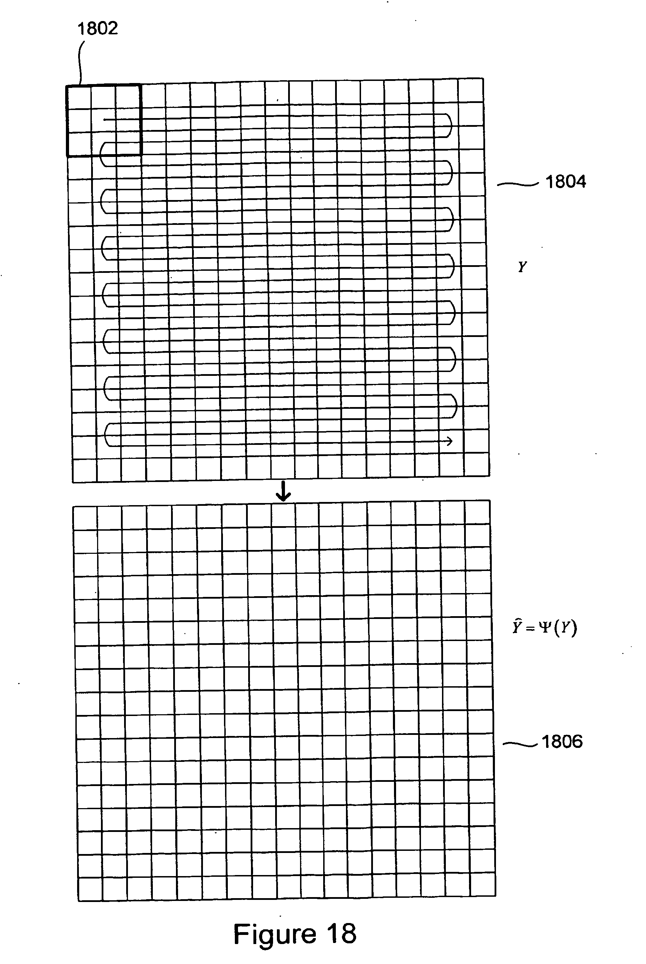

While the phrase "robust filtering" accurately describes certain multi-scale spatial-processing techniques employed by the multi-scale denoising, sharpening, and contrast-enhancement module, other alternative implementations of what is referred to as "robust filtering" may not be, strictly speaking, filtering operations, but may instead involve non-filter operations. Nonetheless, the phrase "robust filtering" is employed, in the following discussion, to mean the collection of filtering, enhanced filtering, and non-filtering methods that can be employed at similar positions within the subsequently described multi-scale robust filtering and contrast enhancement methods and systems that represent embodiments of the present invention. Figure 18 illustrates one embodiment of a robust-filtering operation used in embodiments of the present invention. As shown in Figure 18, the robust-filtering operation is a neighborhood-based operation, with a 3 x 3 neighborhood 1802, or window, of the original image *Y* 1804 considered for each non-boundary pixel within the original image *Y* in order to generate the corresponding pixel values of the resultant image $\hat{Y}$ 1806.

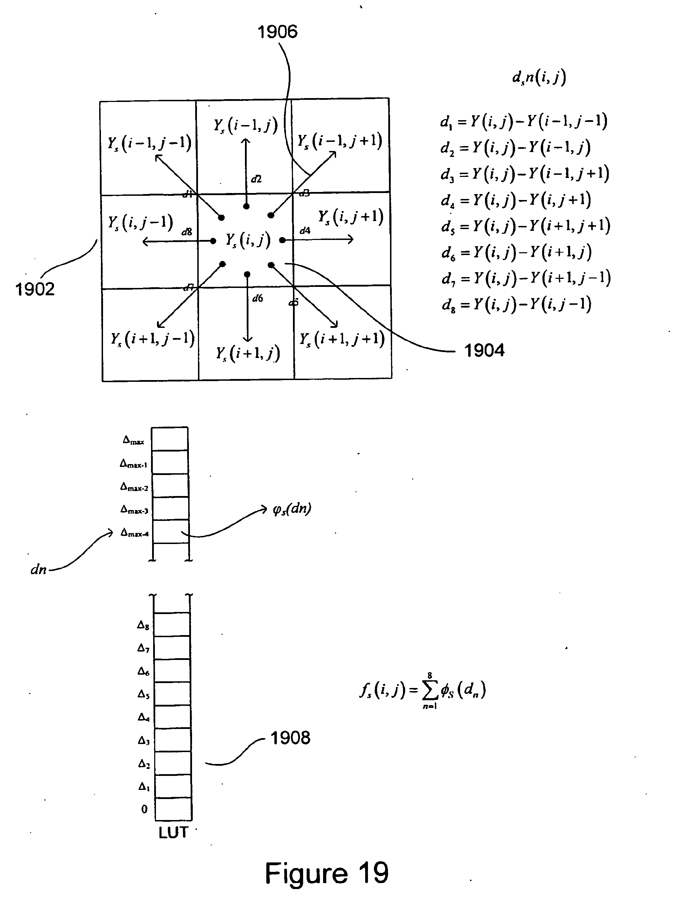

Figure 19 illustrates the filter operation $f_s(i,j)$ carried out on each pixel $Y(i,j)$ of an original image *Y* as part of the robust-filter operation, described above with reference to Figure 18, used in embodiments of the present invention. Figure 19 shows a window $W_s$ 1902 where the *s* refers to a particular scale at which the robust-filtering operation is undertaken. Robust-filtering operations may be different at each of the different scales at which they are undertaken during image enhancement. Again, the window $W_s$ is a small, 3 x 3 neighborhood of an image $Y_s$ at scale *s*. The window is centered at the $Y_s$ pixel $Y_s(i,j)$ 1904. In order to compute the filtering operation $f_s(i,j)$, differences are computed by subtracting each non-central pixel value within the window $W_s$ from the central pixel value within the window $W_s$, as indicated by eight arrows, including arrow 1906, in Figure 19. This operation produces the following eight computed difference values:

$$d_1 = Y(i,j) - Y(i-1,j-1)$$

$$d_2 = Y(i,j) - Y(i-1,j)$$

$$d_3 = Y(i,j) - Y(i-1,j+1)$$

$$d_4 = Y(i,j) - Y(i,j+1)$$

$$d_5 = Y(i,j) - Y(i+1,j+1)$$

$$d_6 = Y(i,j) - Y(i+1,j)$$

$$d_7 = Y(i,j) - Y(i+1,j-1)$$

$$d_8 = Y(i,j) - Y(i,j-1)$$

In alternative embodiments, a differently sized region of the image may be used as a window, and a different number of differences is generated during each window-based operation.

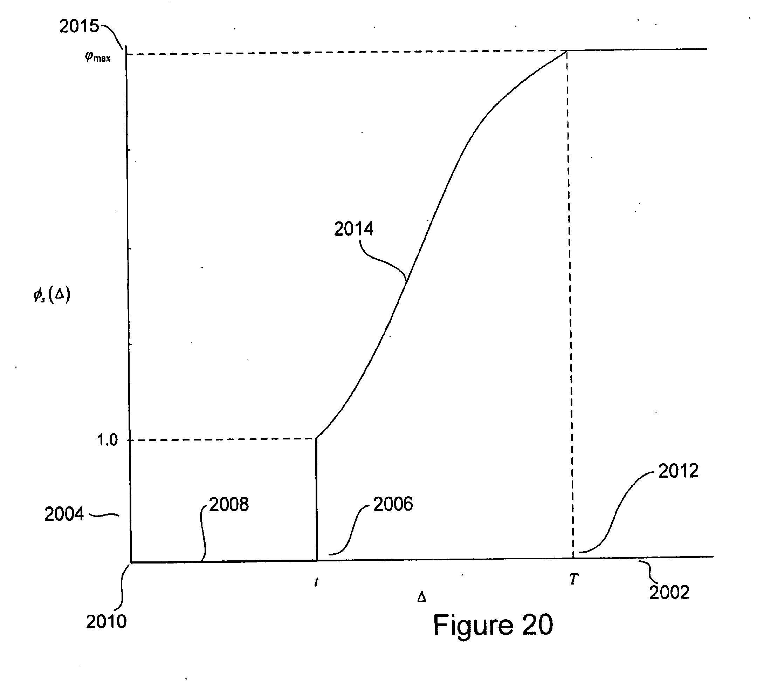

Each of the differences $d_n$, where $n \in \{1,2,...,8\}$, are used as an index into a lookup table 1908, with corresponding values in the lookup table representing a function $\varphi_s$ applied to each of the different differences. The lookup table is a discrete representation of a non-linear function. Figure 20 illustrates the general form of the non-linear function used in the filter operation $f_s(i,j)$, used in embodiments of the present invention. As shown in Figure 20, the function $\varphi_s$ computes a value $\varphi_s(\Delta)$, plotted with respect to the vertical axis 2004, for each different possible $\Delta$ in the domain, plotted with respect to the horizontal axis 2002. Below a first threshold $t$ 2006, the function $\varphi_s$ returns a value of 0, as represented by the horizontal segment 2008 of function $\varphi_s$ from the origin 2010 to the first threshold $\Delta = t$ (2006). Between the first threshold $\Delta = t$ (2006) and a second threshold $\Delta = T$ (2012), the function $\varphi_s$ returns a value somewhat greater than the corresponding $\Delta$ value. In other words, between $\Delta = t$ and $\Delta = T$, $\varphi_s(\Delta)$ is an amplified value corresponding to an input $\Delta$ value, as represented by the curved segment 2014 of the function $\varphi_s$ shown in Figure 20. At the second threshold $\Delta = T$ (2012), the function $\varphi_s(\Delta)$ reaches a maximum value $\varphi_{max}$ 2015, and for all A values greater than $T$, function $\varphi_s(\Delta)$ returns the maximum value $\varphi_{max}$. Various different functions $\varphi_s$ may be employed in different embodiments of the present invention. In the embodiment shown in Figure 20, $\varphi_s$ is an s-curve-like non-linear function between thresholds $\Delta = t$ and $\Delta = T$. In alternative embodiments, this portion of the graph of $\varphi_s$ may be a straight line with a positive slope greater than 1.0, and in other embodiments, may have other, different forms. In general, whether linear or non-linear, this central portion of the graph of $\varphi_s$ is non-decreasing over $t \leq \Delta \leq T$.

The final, computed filter value $f_s$ for pixel $Y_s(i,j)$ is then the sum of the eight values $\varphi(d_n)$ computed by applying the function $\varphi_s$, described with reference to Figure 20, where the $d_n$ values are the eight difference values computed by subtracting each of the neighboring pixel values from the central pixel value, as shown in Figure 19:

$$f_s(i,j) = \sum_{n=1}^{8} \phi_s(d_n)$$

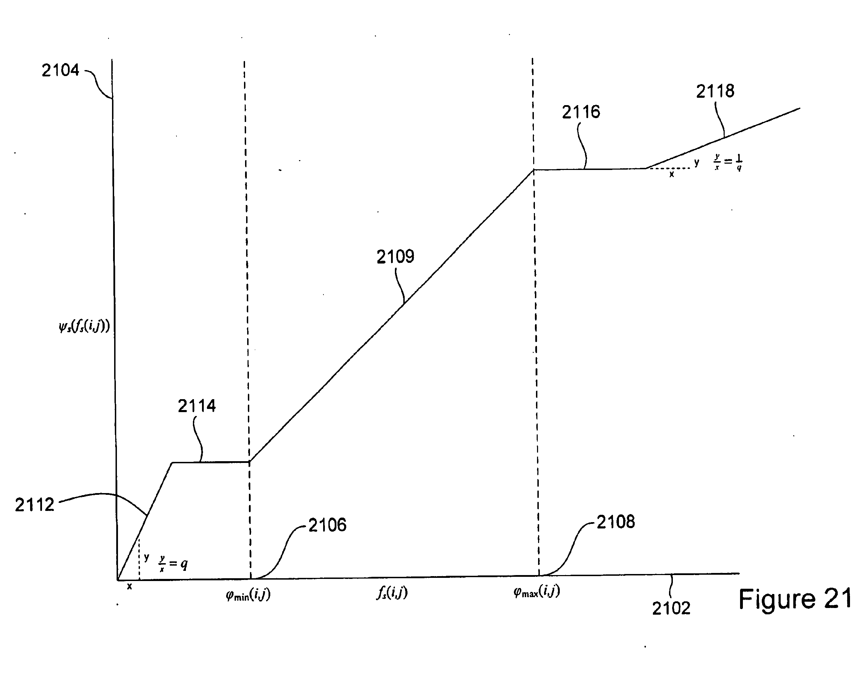

A final operation is performed on the filter value $f_s(i,j)$, computation of which is discussed above with reference to Figures 19-20. This operation, represented as function $\psi$, is used to remove any new local maxima and minima introduced by robust filtering. Figure 21 illustrates the function $\psi_s$, used in embodiments of the present invention. The domain of the function, represented by the horizontal axis 2102, comprises the values $f_s(i,j)$ computed, as discussed above, with reference to Figures 19-20. The function $\psi_s$ computes corresponding values $\psi_s(f_s(i,j))$, represented by the vertical axis 2104 in Figure 21. Between a lower threshold $\varphi_{min}(i,j)$ 2106 and an upper threshold $\varphi_{max}(i,j)$ 2108, $\psi_s(f_s(i,j))$ returns $f_s(i,j)$, as indicated by the straight line segment 2109 with slope 1 in the graph of function $\varphi_s$. Below the first threshold, $\varphi_{min}(i,j)$ 2106, the function $\psi_s$ multiplies an input value $f_s(i,j)$ by a value $q$ greater than 1.0, and uses the minimum of the result of this multiplication or $\varphi_{min}(i,j)$ for the value returned $\psi_s$, as represented by the initial segment 2112 with slope $q$ followed by the flat segment 2114 with slope 0. Above the threshold $\varphi_{max}(i,j)$, an input value $f_s(i,j)$ is divided by the factor $q$, and the greater of $\varphi_{max}(i,j)$ or $\dfrac{f_s(i,j)}{q}$ is returned as the value $\psi_s(f_s(i,j))$, as illustrated by the initial flat segment 2116 and following straight-line segment 2118 with slope $\dfrac{1}{q}$. Thus, $\psi_s$ amplifies very low $f_s(i,j)$ values and decreases very large $f_s(i,j)$ values. The lower threshold $\varphi_{min}(i,j)$ is the least pixel value within the window $W_s$ about pixel $Y_s(i,j)$, and the threshold $\varphi_{max}(i,j)$ is the greatest pixel value within the window $W_s$ about pixel $Y_s(i,j)$. Thus each pixel of the robustly filtered image $\hat{Y}$ 1006 in Figure 18 is computed by the robust-filter operation as:

$$\hat{Y}_s(i,j) = \psi_s\left(f_s(i,j)\right) = \psi_s\left(\sum_{n=1}^{8} \phi_s\left(d_n(i,j)\right)\right)$$

for the 3 x 3 window discussed above and illustrated in Figure 19. Alternatively, the filter operation can be expressed as:

$$\hat{Y}_s(j,k) = \psi_s\left[Y_s^{\bullet}(j,k)\right] = \psi_s\left[Y_s(j,k) + \sum_{Y(l,m)\in W_{jk}} \varphi_{t_s,T_s}\left[Y_s(j,k) - Y_s(l,m)\right]\right],$$

$$\psi_s\left[Y_s^{\bullet}(j,k)\right] = \begin{cases} \min\left[Y_s^{\bullet}(j,k), q_s \cdot Y_{W_{jk}}^{max}\right], & \text{if } Y_s^{\bullet}(j,k) > Y_{Wjk}^{max} \\ \max\left[Y_s^{\bullet}(j,k), Y_{W_{jk}}^{min}/q_s\right], & \text{if } Y_s^{\bullet}(j,k) < Y_{W_{jk}}^{min} \\ Y_s^{\bullet}(j,k) \quad , \quad\quad otherwise \end{cases}$$

Many different, alternative robust-filter operations are possible. For example, while the window used in the $f_s(i,j)$ component operation, discussed above, involves neighboring pixels to pixel $Y(i,j)$ at the same scale as which robust filtering is being applied, in alternative robust-filtering embodiments, the window may include neighboring pixels to pixel $Y(i,j)$ at higher-resolution, lower-resolution scales, or both higher-resolution and lower-resolution scales, or that neighbor the closest, interpolated pixel corresponding to pixel $Y(i,j)$. Many different non-linear and linear functions may be employed in addition to, or instead of one or both of $\psi$ and $\varphi$ in alternative embodiments.

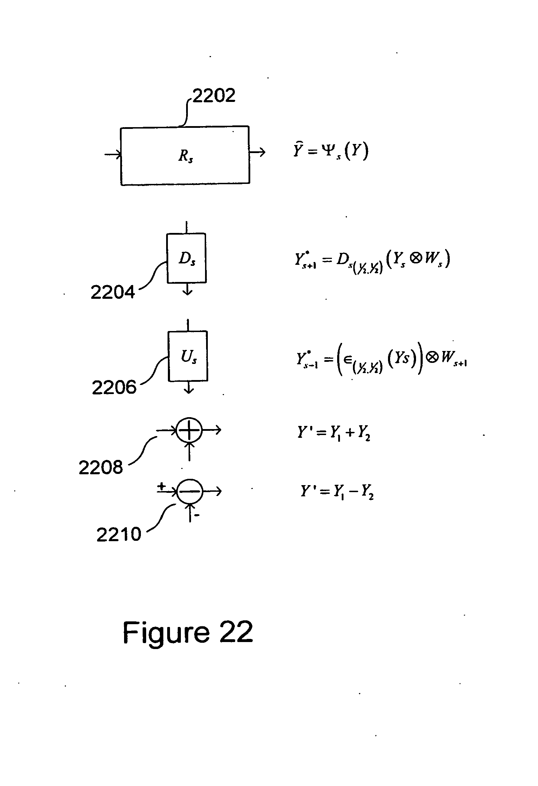

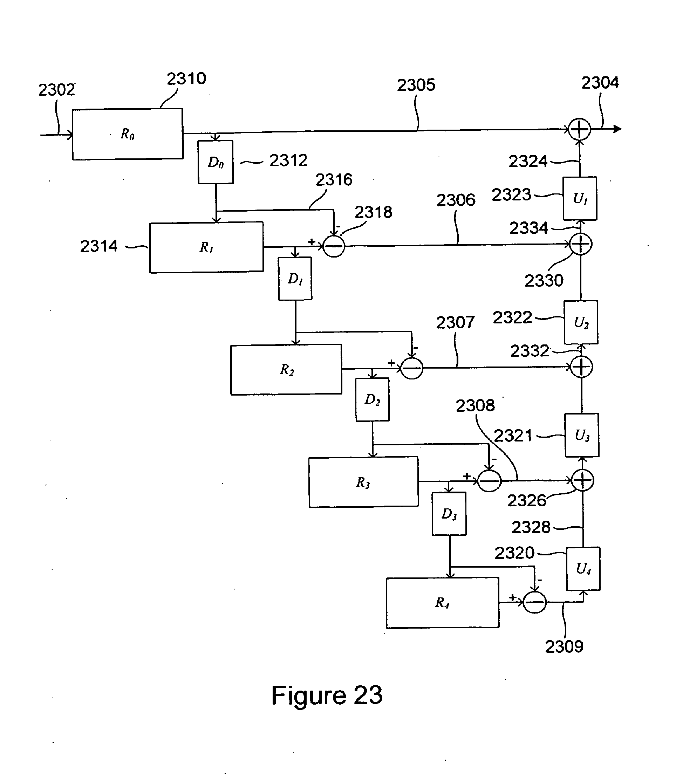

Figure 22 shows a number of illustration conventions used in Figure 23. The first symbol 2202 represents the robust-filtering operation, discussed above with reference to Figures 10-21. The second symbol 2204 represents the $D$ operation, discussed above with reference to Figures 22-23. The third symbol 2206 represents the $U$ operation, discussed above with reference to Figure 17. The fourth symbol 2208 represents addition of two images or signals, as discussed above with reference to Figure 12. The final symbol 2210 represents subtraction of one image from another, also discussed above with reference to Figure 12. Note that the $R$, $D$, and $U$ symbols are subscripted by a scale $s$. The various $R$, $D$, and $U$ operations may be, in various embodiments of the present invention, scale dependent, with different $R$, $D$, and $U$ used at different scales. As discussed above, there are many alternative $R$, $D$, and $U$ operation embodiments.

Figure 23 illustrates one multi-scale robust sharpening and contrast-enhancing method that is employed by the multi-scale denoising, sharpening, and contrast-enhancement module in various embodiments of the present invention. Input to the method is represented by arrow 2302. Output of the sharpened input image is represented by arrow 2304. Each level of Figure 23, corresponding to horizontal lines 2305-2309 that each represents a correction signal, corresponds to a different scale at which robust filtering is carried out according to the described embodiment of the present invention. Thus, scale $s = 0$ corresponds to horizontal line 2305 in Figure 23, scale $s = 1$ corresponds to horizontal line 2306 in Figure 23, etc. The input image 2302 is first subject to robust filtering 2310 and the output from robust filtering is then subject to the $D$ operation 2312 to produce both input to the second robust filter 2314 as well as input to 2316 a subsequent image subtraction operation 2318 that produces a correction signal.

In Figure 23, robust filtering is carried out at five different scales, or resolutions. In general, the number of scales, resolutions, or, equivalently, levels is a selectable parameter, within constraints arising from the image and window sizes, computational-efficiency constraints, and other considerations. The values representing scales increase with decreasing resolution, according to the labeling conventions used in Figure 23. At each scale, the input image at that scale is first robustly filtered, and then subject to the $D$ operation to produce input to the next highest scale, or, equivalently, to the next lowest resolution. Following robust filtering and $D$ operations performed at the five different scales, a series of $U$ operations 2320-2323 are performed to produce a final $U$-operation output 2324 which is added to the first robust-filter output 2305 to produce the final, sharpened output image 2304. A correction signal is produced, at each scale, by a subtraction operation, such as subtraction operation 2318. At a given scale (e.g. the scale corresponding to line 2306), the correction signal 2306 is added 2330 to output from an upscale operation 2322 carried out on an intermediate output 2332 from a lower-resolution scale, and the sum of the intermediate output signal and the correction signal comprise the output signal 2334 at the given scale that is input to a next upscale operation 2323.

In general, the input image at a particular scale is subtracted from the robust-filtering output at that scale to produce input to a $U$ operation that generates one input to the $U$ operation of a lower-numbered scale. At intermediate levels, the output from robust filtering at the intermediate level minus the input from that level is added, by an image-addition operation, such as image-addition operation 2326, to output from the $U$ operation of a preceding level, such as output 2328, and the image sum is then input to the $U$ operation of the next, higher-level resolution or lower-numbered scale. Thus, according to the present invention, at each level, the image is robustly filtered, in order to sharpen and enhance the image, and then downscaled and, optionally, smoothed, by a $D$ operation, to produce the input for the next lowest-resolution level of processing. The differences between output of the robust filter and the input to the robust filter are used, in addition to output of a lower-resolution-level $U$ operation, as input to a $U$ operation at that level to generate output to the next higher-resolution level.

## Motion-Detection Module

Next, operation of the motion-detection module (808 in Figure 8) is described. As discussed above, motion detection involves analysis of some subsequence of time-ordered frames within a video stream, since motion in a video stream is related to changes in pixel values over time. Analysis of motion in a video stream may involve quite complex and computationally expensive analysis. A real-time video-processing system cannot afford the time to carry out many of these types of analyses. Instead, relatively simple and computationally tractable procedures are employed, in various embodiments of the present invention. The motion-detection module of a real-time video-processing system that represents one embodiment of the present invention compares each frame in a video steam with the preceding frame in order to compute a factor $\omega_{i,j}$ for each pixel in the frame that is reflective of the probability that the value of each pixel $(i,j)$ in the frame reflects motion, either of a camera recording the video stream or of an object whose image is being recorded. The more likely that the value of a pixel $(i,j)$ reflects motion, the greater the value of $\omega_{i,j}$. In one embodiment of the present invention, $\omega$ factors range in value from 0.0 to 1.0.

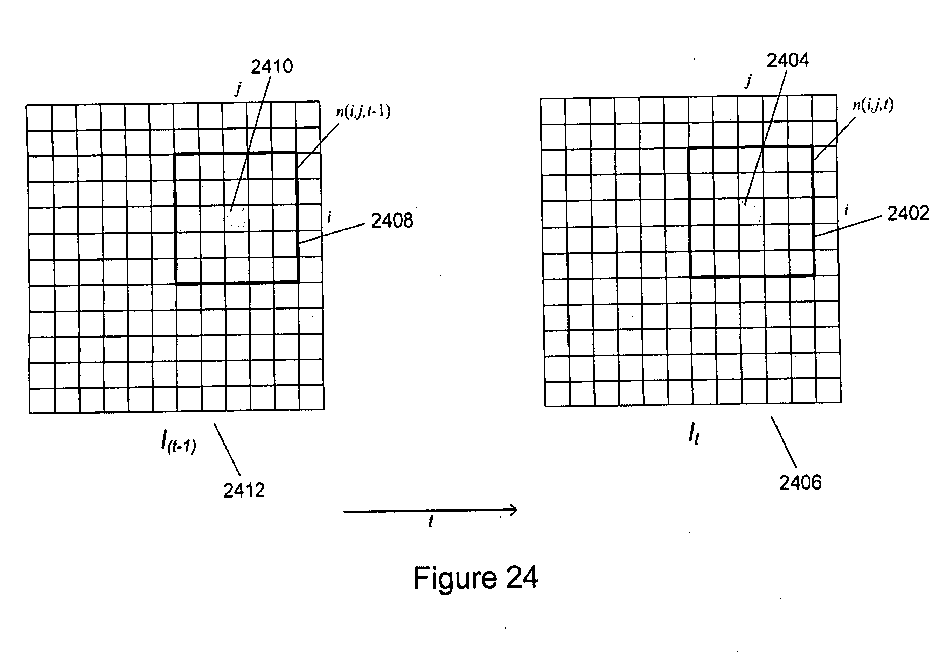

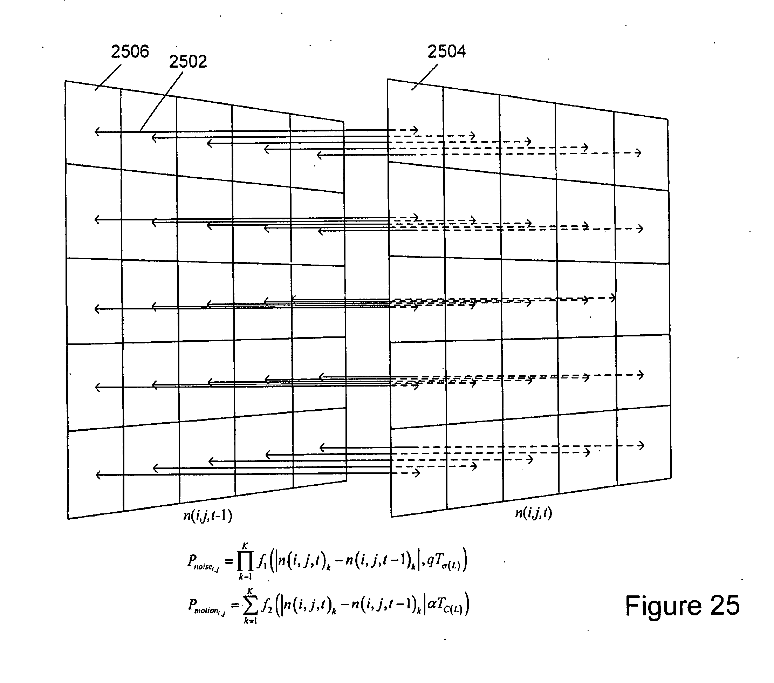

Figures 24-25 illustrate the computation carried out for each pixel in a currently analyzed frame by the motion-detection module of a real-time video-processing system that represents one embodiment of the present invention. As shown in Figure 24, motion detection carried out by the motion-detection module is a neighborhood-based computation, with the motion factor $\omega_{i,j}$ computed for each pixel $(i,j)$ in a currently considered frame based on comparing a neighborhood $n(i,j,t)$ 2402 about a pixel $(i,j)$ 2404 within a currently considered frame $I(t)$ 2406 with a corresponding neighborhood $n(i,j,t-1)$ 2408 about the same pixel $(i,j)$ 2410 in the preceding frame $I(t-1)$ 2412. The multi-scale denoising, sharpening, and contrast-enhancement module (806 in Figure 8) should, in general, have removed noise up to the high noise threshold $q\hat{\sigma}_n(L)$ for a pixel $(i,j)$, where $L$ is the average pixel value in the neighborhood of pixel $(i,j)$. Thus, any remaining noise should be greater than $q\hat{\sigma}_n(L)$. A high-threshold signal contrast within the neighborhood is given by $\alpha C$ $(L)$, where $\alpha$ as a constant. In other words, the signal contrast is related to the weighted-average variance $\hat{\sigma}_w^2$ for all blocks in a partition associated with the average pixel value $L$. The motion-detection module, as shown in Figure 25, computes the difference between each pixel in the neighborhood of pixel $(i,j)$, $n(i,j,t)$, in the currently considered image $I(t)$ and the corresponding pixel in the neighborhood $n(i,j,t-1)$ of the preceding frame $I(t-1)$ where, in Figure 25, each double-headed arrow, such as double-headed arrow 2502, represents a subtraction operation between the values of the pixels, such as pixels 2504 and 2506, joined by the double-headed arrow. The differences between all pixels in neighborhood $n(i,j,t)$ and corresponding pixels in neighborhood $n(i,j,t\text{-}1)$ are computed, as shown in Figure 25, and then used to compute the probability that the central pixel $(i,j)$ has a value influenced by noise, $P_{noise_{i,j}}$ and the probability that the value of pixel $(i,j)$ is influenced by motion, $P_{motion_{i,j}}$. In one embodiment of the present invention, these probabilities are computed as follows:

$$P_{noise_{i,j}} = \prod_{k=1}^{K} f_1\left(n\big|(i,j,t)_k - n(i,j,t-1)_k\big|, q\sigma(L)\right)$$

$$P_{motion_{i,j}} = \sum_{k=1}^{K} f_2\left(\big|n(i,j,t)_k - n(i,j,t-1)_k\big|\alpha C(L)\right)$$

where
$f_1$ and $f_2$ are functions that compute the probability of
a pixel-value difference being greater than the
statistical-parameter-based thresholds $q\sigma(L)$ and $\alpha C(L)$.
Note that, as noise is generally modeled as randomly distributed, the probability of differences between corresponding pixels in a neighborhood having a cumulative value greater than a noise threshold is multiplicative, while, in the case of motion, the probabilities of differences between corresponding pixel values of the two neighborhoods having a cumulative value greater than a contrast-dependent threshold is additive, since influences to pixel values by motion are non-random. In other words, motion affects all of the pixels in a neighborhood similarly, in a concerted fashion, while noise, by contrast, tends to be randomly distributed within the neighborhood. The functions $f_1$ and $f_2$ can have various forms. In general, a probability density function is assumed or computed for the difference values, with $f_1$ and $f_2$ thus computing a probability by definite integration of the underlying probability density functions. In many cases, the functions $f_1$ and $f_2$ can be expressed as either closed-form analytical functions or as tables indexed by difference value. The value of $\omega$ for each pixel, $\omega_{i,j}$, is then proportional to the ratio of the probability that the pixel value is influenced by noise to the probability that the pixel value is influenced by motion:

$$\omega_{i,j} \alpha \frac{P_{noise_{i,j}}}{P_{motion_{i,j}}}$$

The $\omega_{i,j}$ values for each pixel $(i,j)$ in a frame are then reported by the motion-detection module to the adaptive, temporal processing module (810 in Figure 8).

Adaptive-Temporal-Processing Module

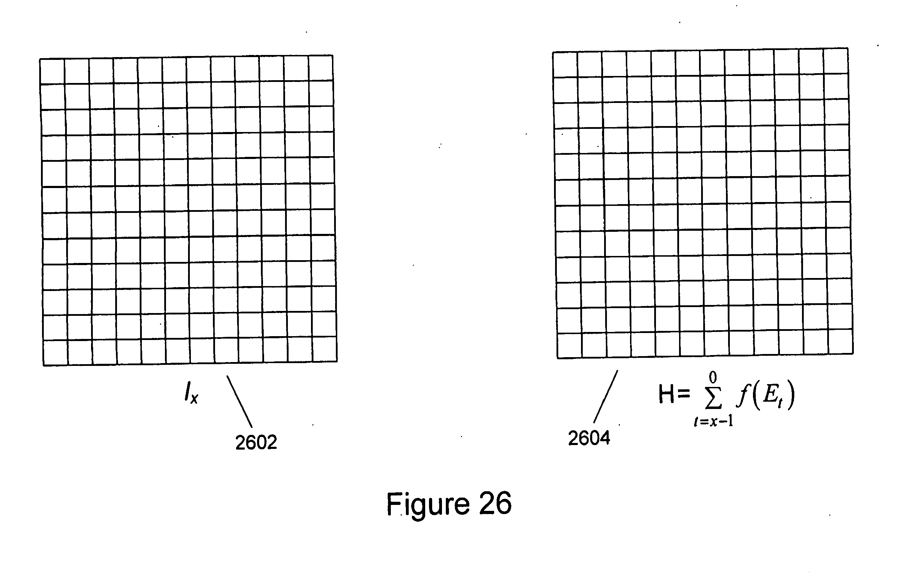

Figures 26-29 illustrate operation of the adaptive-temporal-processing module of a real-time video-processing system that represents one embodiment of the present invention. The adaptive-temporal-processing module (810 in Figure 8) can be thought of as employing, as shown in Figure 26, two frame-related buffers, or data structures: (1) $I_x$ 2602, the currently considered frame that has been spatially processed by the multi-scaled denoising, sharpening, and contrast enhancement module, and that has been processed by the motion-detection module in order to compute the $\omega_{i,j}$ factors for each pixel $(i,j)$ in the image; and (2) the history frame $H$ 2604, that represents a sum, from a last-generated enhanced frame extending back in time over previously generated enhanced frames produced as output by the adaptive-temporal-processing module. In other words, the history frame $H$ can be considered to be a sum:

$$H = \sum_{t=x-1}^{0} f(E_t)$$

where

$E$, is the enhanced frame corresponding to the video frame at time $t$ in the video steam; and

$f(\ )$ is a function that returns a value for each pixel in an enhanced frame.

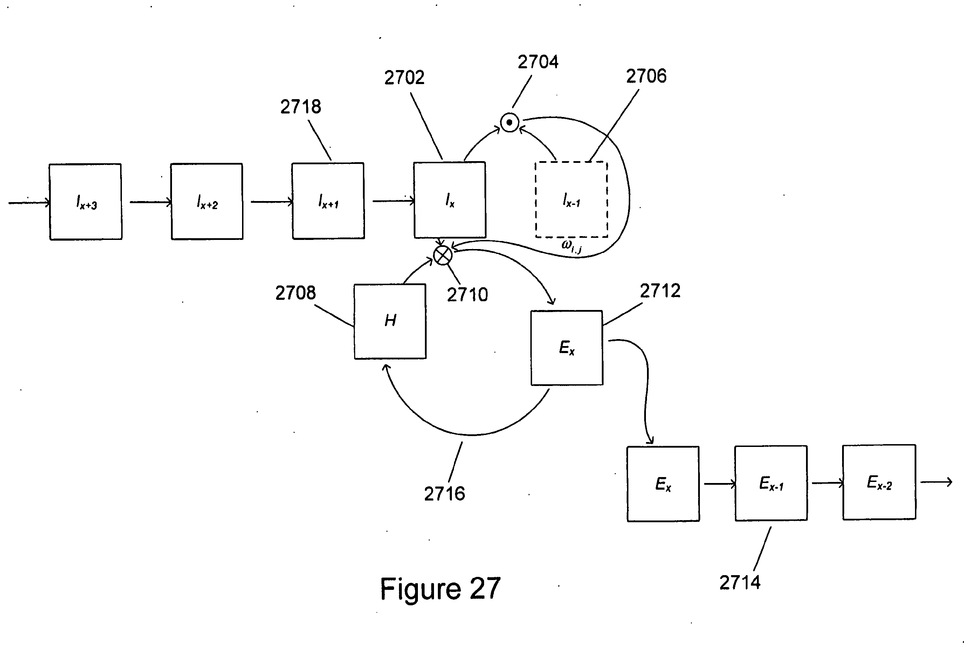

Figure 27 illustrates how the current-frame buffer $I_x$ and the history buffer $H$ are employed by the adaptive-temporal-processing module to produce an enhanced frames $E_x$ corresponding to each frame $I_x$ output from the other modules of the real-time video-processing system. In Figure 27, the frames output by the preceding modules of the real-time video-processing system, such as frame 2702, are labeled $I_x$, $I_{x+1}$, ... , $I_{x+3}$, where $I_x$ represents the current frame, $I_{x+1}$ represents the next frame following the current frame, in time order, and $I_{x-1}$ represents the preceding frame, in time, from the current frame. As discussed above, the motion-detection module carries out a motion-detection operation 2704 on the frame preceding the current frame 2706 and the current frame 2702 to produce the above-discussed factors, $\omega_{i,j}$, for each pixel $(i,j)$ in the current frame $I_x$ 2702. The adaptive-temporal-processing module then uses these factors, $\omega_{i,j}$, the current frame 2702, and the history frame 2708 to carry out a motion-induced-artifact-amelioration operation 2710 to produce the enhanced frame 2712 corresponding to the current frame 2702. The enhanced frames are output 2714 as a stream of processed video frames corresponding to the stream of video frames input to the real-time video-processing system. Note that enhanced frame $E_x$ 2712 produced for a currently considered frame $I_x$ 2702 is then copied into the H-frame buffer 2716 for use in the next motion-affect-amelioration operation carried out by the adaptive-temporal-processing module on the next frame $I_{x+1}$ 2718. The process is therefore recursive, with the H-frame buffer containing pixel values that potentially reflect the pixel values in all previously generated enhanced frames, although, in general, the depth of recursion is usually practically limited to several tens of frames, when no motion-induced artifacts are present, and to only a few frames when motion-induced artifacts are detected.

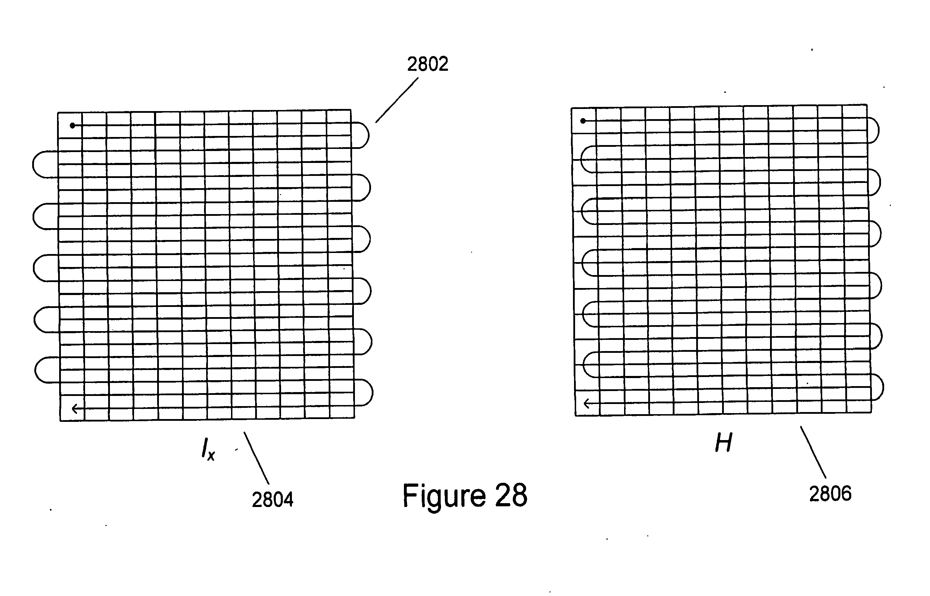

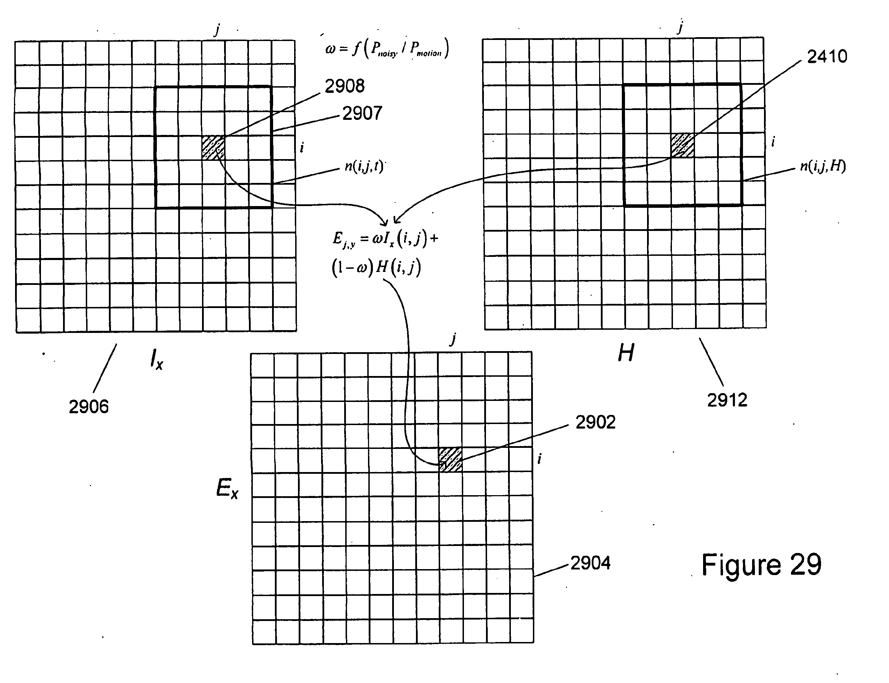

Figure 28 shows that the motion-induced-artifact-amelioration operation, employed in various embodiments of the present invention, is a neighborhood-based operation carried out on each pixel of the currently considered frame $I_x$ 2804 according to a frame-traversal path 2802 identically followed in the currently considered frame $I_x$ and in the history frame H 2806. As discussed, many different traversal paths are possible. Figure 29 illustrates the neighborhood-based operation carried out by the adaptive-temporal-processing module on a given pixel $(i,j)$ of a currently considered frame $I_x$. The value of the pixel $(i,j)$ 2902 in the enhanced frame $E_x$ 2904 corresponding to the currently considered frame $I_x$ 2906, $E_{i,j}$, is equal to the factor $\omega_{i,j}$, computed from the neighborhood $n(i,j,t)$ 2907, times the pixel value of pixel $(i,j)$ 2908 in the currently considered frame $I_x$ plus 1-$\omega$i,j times the corresponding value of pixel $(i,j)$ 2910 in the history frame 2912. In other words:

$$E_{i,j} = \omega_{i,j} I(i,j) + \left(1 - \omega_{i,j}\right) H(i,j)$$

Thus, when a pixel value of pixel $(i,j)$ is not likely to have been influenced by motion, the value of the pixel $(i,j)$ in the H frame contributes most of the value for the pixel in the enhanced frame. However, when the value of pixel $(i,j)$ in the currently considered image $I_x$ appears to have been strongly influenced by motion, the value for pixel $(i,j)$ in the current frame $I_x$ contributes most of the value to the corresponding pixel of the enhanced frame. This method averages pixel values over a subset of time-ordered frames extending back in time from the current frame, when little or no motion is present, and beginning to a new subset of time-ordered frames, by truncating the recursion, when motion is detected.

As discussed above, the multi-scale denoising, sharpening, and contrast-enhancement module, motion-detection module, and adaptive-temporal-processing module may be implemented together as one embodiment of a processing module, or implemented in various combinations that together comprise a processing module. A processing module uses statistics computed by the measurement module, one embodiment of which is the above-discussed noise-and-contrast module, in order to carry out spatial and temporal processing of each frame in a video stream.

Control-Flow-Diagram Description

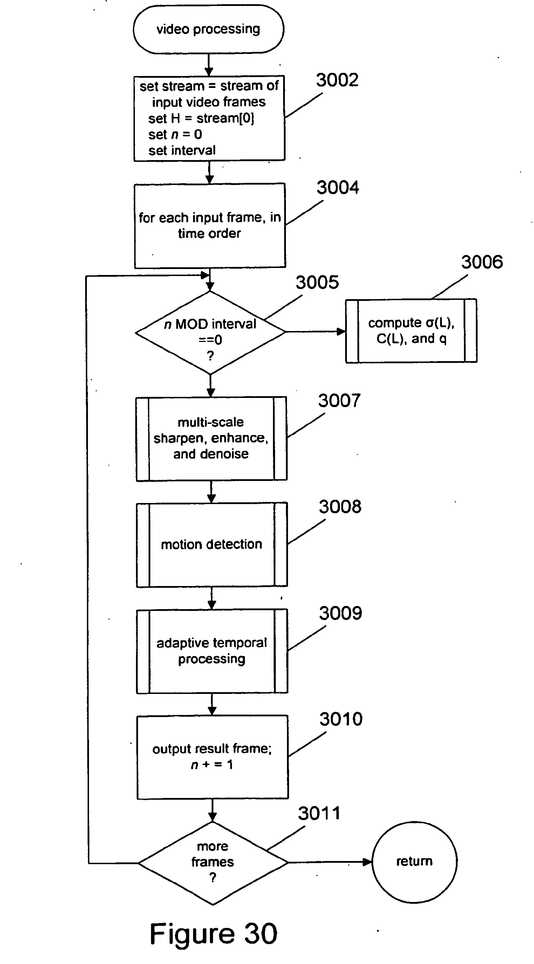

Finally, Figures 30-33 provide control-flow diagrams for the real-time video-processing method of the present invention carried out by real-time video-processing systems that represent embodiments of the present invention. Figure 30 shows a high-level control-flow diagram for embodiments of the real-time video-processing method of the present invention. In step 3002, reception of a stream of video frames is initialized, the $H$-frame buffer (2604 in Figure 26) is initialized to be the first frame of the video stream, local variable $n$, which store the current frame number, is set to 0, and local variable "interval," which represents the interval between noise-and-contrast-module processing of frames, is set to an initial value, such as 20 or 30. Next, in the *for*-loop of steps 3004-3011, the frames of the input video stream are processed. When the remainder of division of the number $n$ of the currently considered frame by the local variable "interval" is 0, as determined in step 3005, then the currently considered frame is processed by the noise-and-contrast module (804 in Figure 8) in step 3006 to produce the above-discussed statistical functions $\hat{\sigma}_n(L)$ and $C(L)$, as well as an over-all estimate of the skew of pixel-value distributions $q$ or a statistical function $q(L)$, as discussed above with reference to Figures 9-11. Each frame is then processed by the multi-scale sharpening, enhancing, and denoising module (806 in Figure 8) in step 3007, the motion-detection module (808 in Figure 8), in step 3008, and the adaptive-temporal-processing module (810 in Figure 8), in step 3009, prior to output of the enhanced frame in step 3010 and incrementing of the frame number $n$. Figure 30 thus illustrates, in control-flow-diagram form, the overall real-time video-processing system shown in Figure 8.

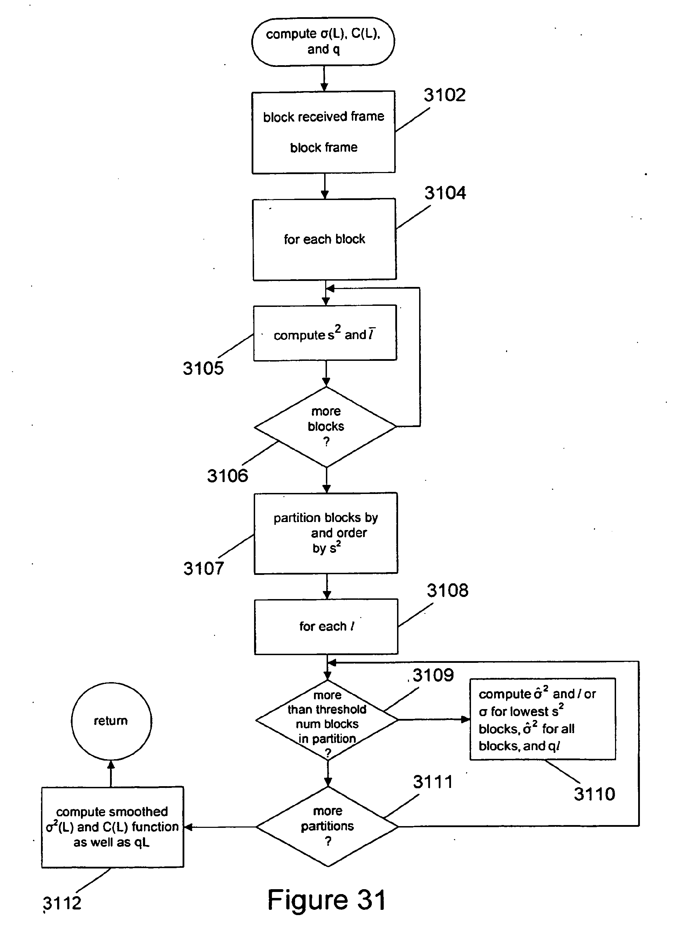

Figure 31 provides a control-flow diagram of the noise-and-contrast module of a real-time video-processing system that represents one embodiment of the present invention. A next frame is received, in step 3102, and the received frame is partitioned into blocks. Then, in the *for*-loop of steps 3104-3106, an average pixel value and sample variance is computed for each block. In step 3107, the blocks are partitioned by average pixel value, and each partition of blocks is ordered by sample variance, as illustrated in Figure 9. Then, in the *for*-loop of steps 3108-3111, the various statistical parameters are estimated for each partition. Finally, in step 3112, the statistical functions $\hat{\sigma}_n(L)$ and $C(L)$ are obtained by interpolation and smoothing of the pixel-value-associated statistical values computed in the *for*-loop of steps 3108-3111, and a skew value $q$ is computed for the pixel-value distributions of each partition.

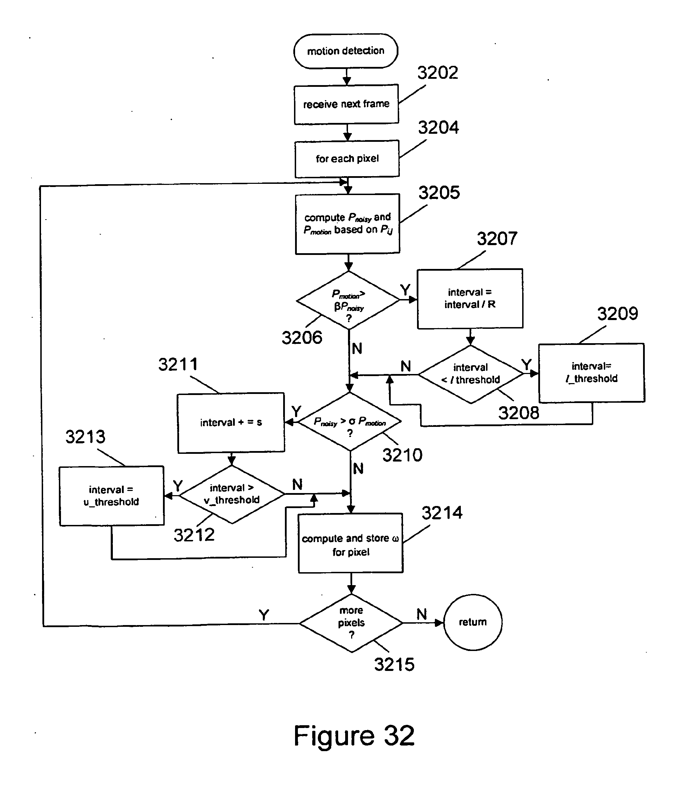

Figure 32 provides a control-flow diagram of the motion-detection module of a real-time video-processing system that represents an embodiment of the present invention. In step 3202, the next frame is received. In the *for*-loop of steps 3204-3215, the $\omega_{ij}$ factor is computed, by neighborhood-based computation, for each pixel of the received frame. When the probability of motion greatly exceeds the probability of noise, as determined in step 3206, then the local variable "interval" may be adjusted downward, in step 3207, so that the motion can be better tracked by the noise-and-contrast module (804 in Figure 8). Thus, the local variable "interval" provides feedback from the motion-detection module to the noise-and-contrast module. Similarly, when the probability of noise greatly exceeds the probability of motion, as determined in step 3210, then the local variable "interval" may be increased, in step 3211, so that unnecessary computational overhead is not incurred by the noise-and-contrast module.

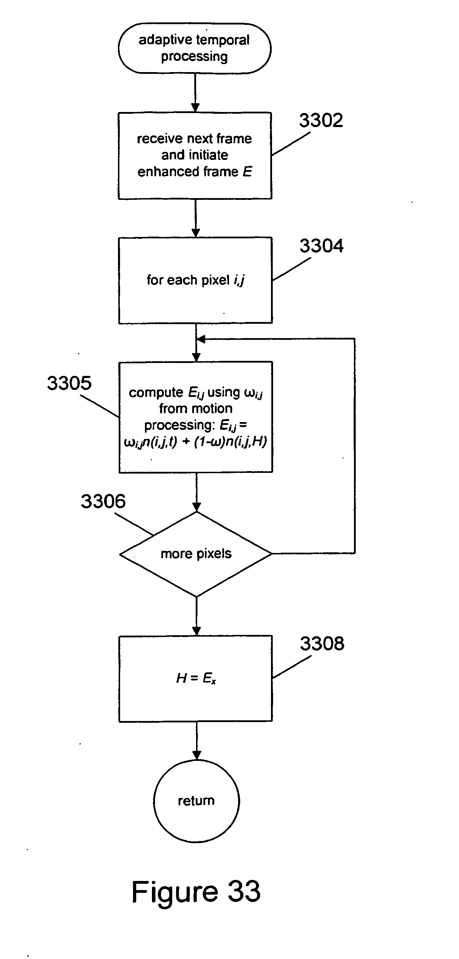

Finally, Figure 33 provides a control-flow diagram for the adaptive-temporal-processing module of a video-processing system that represents one embodiment of the present invention. A next frame is received, in step 3302, and a buffer for the enhanced frame $E_x$ produced from the currently considered frame $I_x$ is initialized. Then, in the *for*-loop of steps 3304-3306, pixel values for the enhanced frame $E_{ij}$ are computed for each pixel $(i,j)$ by the method discussed above with reference to Figures 26-29. Finally, in step 3308, the newly produced enhanced frame $E_x$ is stored into the $H$-frame buffer for subsequent temporal processing operations.

The video frames input to a real-time video-processing system that represents an embodiment of the present invention are generally transmitted through an electronic communications medium and stored in memory buffers, and the corresponding enhanced video frames output by the real-time video-processing system are output to memory, to an electronic communications medium, or rendered for display by a digital-video-stream rendering system or device for display to one or more users of the digital-video-stream rendering system or device. The real-time video-processing system stores input video frames in memory, and processes video frames by accessing, operating, and storing the values of frame pixels in memory.

Although the present invention has been described in terms of particular embodiments, it is not intended that the invention be limited to these embodiments. Modifications within the spirit of the invention will be apparent to those skilled in the art. For example, a real-time video-processing system may be implemented in software, hardware, firmware, or some combination of software, hardware, and firmware for execution within a variety of different computer and device platforms. The real-time video-processing method of the present invention can be implemented in a large number of different ways by varying various implementation parameters, including modular organization, programming language, data structures, control structures, and other such parameters. Larger or smaller neighborhoods may be used in the neighborhood-based operations, and various techniques may be used to avoid recomputation of values for adjoining neighborhoods. As discussed above, all of the GPU-executed modules may be combined together, combined in two modules, or, alternatively, may be carried out in some larger number of modules. Many of the variables discussed above, including neighborhood size, threshold-determining constants, various other constants, intervals, and other such parameters may be varied for different applications or may vary during video processing, according to the content of video frames. The real-time video-processing system may be implemented as a set of instructions stored on one or more computer readable media that are executed by one or more CPUs and/or GPUs within a computer system.

The foregoing description, for purposes of explanation, used specific nomenclature to provide a thorough understanding of the invention. However, it will be apparent to one skilled in the art that the specific details are not required in order to practice the invention. The foregoing descriptions of specific embodiments of the present invention are presented for purpose of illustration and description. They are not intended to be exhaustive or to limit the invention to the precise forms disclosed. Many modifications and variations are possible in view of the above teachings. The embodiments are shown and described in order to best explain the principles of the invention and its practical applications, to thereby enable others skilled in the art to best utilize the invention and various embodiments with various modifications as are suited to the particular use contemplated. It is intended that the scope of the invention be defined by the following claims and their equivalents:

**Claims**

1. A real-time video-processing system (704) adapted to receive an input stream (702) of video frames and to output a stream (706) of enhanced frames (2712, 2904) for storage, transmission, and/or rendering for display, the real-time video-processing system (704) comprising:

   a measurement module (804), executed on one or more central processing units (402) of a computer system, that generates, from selected frames of the input stream (702),of video frames, one or more functions of noise-related statistics with respect each to pixel value; and
   a processing module (810), executing on one or more graphical processor units of a computer system, includes a multi-scale denoising, sharpening, and contrast-enhancement module (806) that employ the one or more functions of noise-related statistics with respect to each pixel value, generated by the measurement module (804), to process each frame (802, 812, 813, 902, 2406, 2412, 2702, 2706, 2804, 2906) of the input stream (702) of video frames, including denoising, sharpening, contrast enhancing, and deblurring each frame (802, 812, 813, 902, 2406, 2412, 2702, 2706, 2804, 2906), in order to output the stream (706) of enhanced frames (2712, 2904) by:

   at each of one or more currently considered scales of resolution greater than a lowest resolution scale, downscaling (1408) either the input frame (1302) or an intermediate frame (1406) derived from the input frame (1402) to produce an intermediate frame (1406) for input to a next-lower resolution scale,
   upscaling (2322, 2323) an intermediate frame (2332) received from a lower-resolution scale to produce an intermediate frame for output to a next-higher-resolution scale, and
   filtering (2310) at least one of the input frames (2302) or intermediate frames, using the function of noise-related variance with respect to pixel value or the function of noise-related standard deviation with respect to pixel value to compute noise-related thresholds

   wherein the processing module (810) further includes a motion-detection module (808), the motion-detection module (808) generating a factor $\omega_{i,j}$ for each pixel in each spatially-processed frame generated by the multi-scale denoising, sharpening, and contrast-enhancement module (806) by:

   in a neighborhood-based operation, considering each pixel (*i*, *j*) (506, 2404, 2908) in the spatially-processed frame occurring at time *t* in the stream (702) of video frames within neighborhood *n(i,j,t)* (504, 508, 1802, 2402, 2907) by
   computing a magnitude of the difference between each pixel *k* in the neighborhood *n(i,j,t)*, $n(i,j,t)_k$, and a corresponding pixel *k* (2410) in the neighborhood $n(i,j, t\text{-}1)_k$ (2408) of the spatially-processed frame occurring at time *t* - 1 in the stream (702) of video frames and immediately preceding the spatially-processed frame occurring at time *t* in the stream (702) of video frames,
   computing, from the computed magnitudes between the corresponding pixels in neighborhood *n(i,j,t)* and neighborhood *n(i,j,t* -1), a probability that the value of pixel (*i*, *j*) is influenced by noise, $P_{noise}$, and a probability that the value of pixel (*i*, *j*) is influenced by motion, $P_{motion}$, and

   computing $\omega_{i,j}$ as proportional to the ratio $\dfrac{P_{noise}}{P_{motion}}$)

   wherein $\omega_{i,j}$ is used to compute the value of each pixel (i, j) in the corresponding enhanced frame.

2. The real-time video-processing system (704) of claim 1 wherein the measurement module (804) selects frames from which to generate the one or more functions of noise-related statistics with respect to each pixel value by one of:

   selecting each frame (812, 183) that occurs within the input stream (702) of video frames at a fixed frame interval;
   selecting each frame (812, 813) that occurs within the input stream (702) of video frames at a fixed time interval;
   selecting each frame that occurs within the input stream (702) of video frames at a variable frame interval; and
   selecting each frame that occurs within the input stream (702) of video frames at a variable time interval.

3. The real-time video-processing system (704) of claim 1 wherein the measurement module (804) generates, from selected frames of the input stream (702) of video frames, one or more functions of noise-related statistics with respect to each pixel value by:

generating (3102) blocks of pixels from the frame;
computing (3105) an average pixel value and estimated sample variance for each block;
partitioning (3107) the blocks into partitions, each partition associated with a different average pixel value;
for each partition,
removing outlier blocks based on estimated sample variances to produce a block partition without outlier blocks,
computing a noise-related estimated variance and/or standard deviation from a number of blocks of the block partition without outlier blocks, the number of blocks having lowest estimated sample variances among the blocks of the block partition without outlier blocks, and
computing a contrast-related variance from the blocks of the block partition without outlier blocks;
computing a function of noise-related variance with respect to pixel value and/or a function of noise-related standard deviation with respect to pixel value;
and computing a function of contrast-related variance with respect to pixel value.

4. The real-time video-processing system (704) of claim 1 wherein the motion-detection module computes $P_{noise}$ and $P_{motion}$ as:

$$P_{noise_{i,j}} = \prod_{k=1}^{K} f_1\left(\left(n(i,j,t)_k - n(i,j,t-1)_k\right), q\sigma(L)\right)$$

$$P_{motion_{i,j}} = \sum_{k=1}^{K} f_2\left(\left(n(i,j,t)_k - n(i,j,t-1)_k\right), \alpha C(L)\right)$$

where
$f_1$ and $f_2$ are functions that compute the probability of a pixel-value difference being greater than the statistical-parameter-based thresholds $q\sigma(L)$ and $\alpha C(L)$.

5. The real-time video-processing system (704) of claim 1 wherein the processing module (810) includes a adaptive-temporal-processing module, the adaptive-temporal-processing module maintains a history frame $H$ that represents a recursively generated history of previous enhanced frames (2712, 2904) output by the adaptive-temporal-processing module, the history frame defined as:

$$H = \sum_{t=x-1}^{0} f(E_t)$$

where
$E_1$ is the enhanced frame (2712, 2904) corresponding to the video frame at time $t$ in the video steam; and
$f( )$ is a function that returns a value for each pixel in an enhanced frame (2712, 2904).

6. The real-time video-processing system (704) of claim 5 wherein the adaptive-temporal-processing module carries out temporal processing on each spatially-processed frame to produce a corresponding enhanced frame (2712, 2904) by:

for each pixel ($i,j$) in the spatially processed frame,
computing the value of the corresponding enhanced-frame pixel $E_{i,j}$ as

$$E_{i,j} = \omega_{i,j} I(i,j) + (1 - \omega_{i,j}) H(i,j)$$

7. The real-time video-processing system (704) of claim 6 wherein, following computing a next enhanced frame $E_t$ (2712, 2904) corresponding to a spatially-processed frame occurring at time $t$ in the input stream (702) of video frames, the real-time video-processing system (704) replaces the current history frame $H$ by the next enhanced frame $E_t$ (2712, 2904).

8. The real-time video-processing system (704) of claim 1 wherein in the neighborhood-based operation, each pixel $(i,j)$ in the spatially-processed frame occurring at time $t$ in the stream (702) of video frames within neighborhood $n$ $(i,j,t)$ is considered by

   computing a magnitude of the difference between each pixel $k$ in the neighborhood $n(i,j,t)$, $n(i,j,t)_k$, and a corresponding pixel $k$ in the history $H(i,j,t\text{-}1)_k$ calculated at time $t$ - 1 in the stream (702) of video frames and immediately preceding the spatially-processed frame occurring at time $t$ in the stream (702) of video frames,

   computing, from the computed magnitudes between the corresponding pixels in neighborhood $n(i,j,t)$ and history $H$ $(i,j,t\text{-}1)$, a probability that the value of pixel $(i,j)$ is influenced by noise, $P_{noise}$, and a probability that the value of pixel $(i,j)$ is influenced by motion, $P_{motion}$, and

   computing $\omega_{i,j}$ as proportional to the ratio $\dfrac{P_{noise}}{P_{motion}}$.

9. The real-time video-processing system (704) of claim 8 wherein the motion-detection module computes $P_{noise}$ and $P_{motion}$ as:

$$P_{noise_{i,j}} = \prod_{k-1}^{K} f_1\big((n(i,j,t)_k - n(i,j,t-1)_k), q\sigma(L)\big)$$

$$P_{motion_{i,j}} = \sum_{k=1}^{K} f_2\big((n(i,j,t)_k - n(i,j,t-1)_k), \alpha C(L)\big)$$

   where
   $f_1$ and $f_2$ are functions that compute the probability of a pixel-value difference being greater than the statistical-parameter-based thresholds $q\sigma(L)$ and $\alpha C(L)$.

10. The real-time video-processing system (704) of claim 7 wherein the motion-detection module and the adaptive-temporal-processing module are one of:

    separate modules; and
    functionality within a single temporal-processing module.

11. The real-time video-processing system (704) of claim 7 wherein the multi-scale denoising, sharpening, and contrast-enhancement module (806) is one of:

    a separate module;
    functionality within a single processing module (810).

12. A method for enhancing an input stream (702) of video frames, the method comprising:

    on one or more central-processing units (402) of a computer system, generating, from selected frames of the input stream (702) of video frames, one or more functions of noise-related statistics with respect to each pixel value;
    on one or more graphical processor units of the computer system, employing the one or more functions of noise-related statistics with respect to each pixel value to process each frame of the input stream (702) of video frames, including denoising, sharpening, contrast enhancing, and deblurring each frame, in order to output a stream (706) of enhanced frames (2712, 2904) for storage, transmission, and/or rendering for display;
    at each of one or more currently considered scales of resolution greater than a lowest resolution scale,

downscaling either the input frame or an intermediate frame derived from the input frame to produce an intermediate frame for input to a next-lower resolution scale,
upscaling an intermediate frame received from a lower-resolution scale to produce an intermediate frame for output to a next-higher-resolution scale, and
filtering at least one of the input frame or intermediate frames, using the function of noise-related variance with respect to pixel value or the function of noise-related standard deviation with respect to pixel value to compute noise-related thresholds,
wherein factor $\omega_{i,j}$ for each pixel in each spatially-processed frame is generated by:

in a neighborhood-based operation, considering each pixel ($i, j$) in the spatially-processed frame occurring at time $t$ in the stream (702) of video frames within neighborhood $n(i, j, t)$by
computing a magnitude of the difference between each pixel $k$ in the neighborhood $n(i,j,t)$, $n(i,j,t)_k$, and a corresponding pixel $k$ in the neighborhood $n(i,j,t\text{-}1)_k$ of the spatially-processed frame occurring at time $t$-1 in the stream (702) of video frames and immediately preceding the spatially-processed frame occurring at time $t$ in the stream (702) of video frames,
computing, from the computed magnitudes between the corresponding pixels in neighborhood $n(i,j,t)$ and neighborhood $n(i,j,t$-1), a probability that the value of pixel ($i,j$) is influenced by noise, $P_{noise}$, and a probability that the value of pixel ($i,j$) is influenced by motion, $P_{motion}$, and

computing $\omega_{i,j}$ as proportional to the ratio $\dfrac{P_{noise}}{P_{motion}}$ wherein $\omega_{i,j}$ is used to compute the value of each pixel (i, j) in the corresponding enhanced frame.

## Patentansprüche

1. Echtzeit-Videoverarbeitungssystem (704), das dazu ausgelegt ist, einen Eingangsstrom (702) von Videorahmen zu erhalten, und einen Strom (706) von verbesserten Rahmen (2712, 2904) zur Speicherung, Übertragung und/oder Anzeige auszugeben, wobei das Videoverarbeitungssystem (704) folgendes umfasst:

ein Messmodul (804), das auf einem oder auf mehreren Hauptprozessoren (402) eines Computersystems durchgeführt ist, das, aus ausgewählten Rahmen des Eingabestroms (702) von Videorahmen, eine oder mehrere Funktionen von rauschbezogenen Statistiken mit Bezug auf jeden Pixelwert erzeugt; und
ein Verarbeitungsmodul (810), das auf einem oder auf mehreren graphischen Prozessoreinheiten eines Computersystems durchgeführt ist, umfasst ein mehrstufiges Entrauschungs-, Schärfungs- und Kontrastverbesserungs-Modul (806), das die eine oder die mehrere Funktionen von rauschbezogenen Statistiken mit Bezug auf jeden Pixelwert verwendet, erzeugt durch das Messmodul (804), um jeden Rahmen (802, 812, 813, 902, 2406, 2412, 2702, 2706, 2804, 2906) des Eingabestroms (702) von Videorahmen zu verarbeiten, inklusive der Entrauschung, Schärfung, Kontrastverbesserung und Scharfstellung jedes Rahmens (802, 812, 813, 902, 2406, 2412, 2702, 2706, 2804, 2906), um den Strom (706) von verbesserten Rahmen (2712, 2904) wie folgt auszugeben mittels:

auf jeder von einer oder von mehreren gegenwärtig berücksichtigten Auflösungsstufen, größer als eine niedrigste Auflösungsstufe,
Abwärtsskalieren (1408) entweder des Eingaberahmens (1302) oder eines Zwischenrahmens (1406), abgeleitet vom Eingaberahmen (1402), um einen Zwischenrahmen (1406) für die Eingabe in eine Stufe mit der nächst-niedrigeren Auflösung zu erzeugen,
Aufwärtsskalieren (2322, 2323) eines Zwischenrahmens (2332), abgeleitet von einer Stufe mit einer niedrigeren Auflösung, um einen Zwischenrahmen zu erzeugen, um eine Stufe mit einer nächst-höheren Auflösung auszugeben, und
Filtern (2310) von mindestens einem der Eingaberahmen (2302) oder Zwischenrahmen unter Verwendung der Funktion der rauschbezogenen Varianz mit Bezug auf den Pixelwert oder der Funktion der rauschbezogenen Standardabweichung mit Bezug auf den Pixelwert, um rauschbezogene Schwellenwerte zu berechnen,
wobei das Verarbeitungsmodul (810) weiter ein Bewegungsnachweismodul (808) umfasst, wobei das Bewegungsnachweismodul (808) einen Faktor $\omega_{i,j}$ für jedes Pixel in jedem räumlich verarbeiteten Rahmen erzeugt, welche durch das mehrstufige Entrauschungs, Schärfungs und Kontrastverbesserungs-Modul (806), erzeugt werden, mittels

in einem nachbarschaftsbasierten Vorgang, unter Berücksichtigung jedes Pixels ($i, j$) (506, 2404, 2908) im räumlich verarbeiteten Rahmen, das zum Zeitpunkt t im Strom (702) von Videorahmen innerhalb der Nachbarschaft $n(i, j, t)$ (504, 508, 1802, 2402, 2907) auftritt, mittels

Berechnung einer Größe des Unterschieds zwischen jedem Pixel $k$ in der Nachbarschaft $n(i, j, t)$, $n(i, j, t)_k$ und einem entsprechenden Pixel $k$ (2410) in der Nachbarschaft $n(i, j, t-1)_k$ (2408) des räumlich verarbeiteten Rahmens, der zum Zeitpunkt $t$ - 1 im Strom (702) von Videorahmen auftritt und unmittelbar dem räumlich verarbeiteten Rahmen vorausgeht, der zum Zeitpunkt t im Strom (702) von Videorahmen auftritt,

Berechnung, aus den berechneten Größen zwischen den entsprechenden Pixeln in der Nachbarschaft $n$ ($i, j, t$) und der Nachbarschaft $n(i, j, t$-1), einer Wahrscheinlichkeit, dass der Wert von Pixel ($i, j$) durch das Rauschen beeinflusst wird, $P_{Rauschen}$, und einer Wahrscheinlichkeit, dass der Wert von Pixel ($i, j$) durch die Bewegung beeinflusst wird, $P_{Bewegung}$, und

Berechnung von $\omega_{i,j}$ als proportional zum Verhältnis $\dfrac{P_{noise}}{P_{motion}}$;

wobei $\omega_{i,j}$ verwendet wird, um den Wert jedes Pixels ($i, j$) im entsprechenden verbesserten Rahmen zu berechnen.

2. Echtzeit-Videoverabeitungssystem (704) nach Anspruch 1, wobei das Messmodul (804) Rahmen auswählt, von denen die eine oder die mehreren Funktionen von rauschbezogenen Statistiken mit Bezug auf jeden Pixelwert erzeugt wird durch eines von:

Auswählen jedes Rahmens (812, 183), der innerhalb des Eingabestroms (702) von Videorahmen in einem festen Rahmenintervall auftritt;
Auswählen jedes Rahmens (812, 813), der innerhalb des Eingabestroms (702) von Videorahmen in einem festen Zeitintervall auftritt;
Auswählen jedes Rahmens, der innerhalb des Eingabestroms (702) von Videorahmen in einem variablen Rahmenintervall auftritt; und
Auswählen jedes Rahmens, der innerhalb des Eingabestroms (702) von Videorahmen in einem variablen Zeitintervall auftritt.

3. Echtzeit-Videoverabeitungssystem (704) nach Anspruch 1, wobei das Messmodul (804), aus ausgewählten Rahmen des Eingabestroms (702) von Videorahmen, eine oder mehrere Funktionen von rauschbezogenen Statistiken mit Bezug auf jeden Pixelwert erzeugt durch:

Erzeugung (3102) von Blöcken von Pixeln aus dem Rahmen;
Berechnung (3105) eines durchschnittlichen Pixelwerts und einer geschätzten Stichprobevarianz für jeden Block;
Unterteilung (3107) der Blöcke in Teile, wobei jeder Teil mit einem unterschiedlichen durchschnittlichen Pixelwert assoziiert ist;
für jeden Teil
Entfernung von Abweichungsblöcken, basierend auf geschätzten Probevarianzen, um eine Blockteilung ohne Abweichungsblöcke zu erzeugen,
Berechnung einer rauschbezogenen geschätzten Varianz und/oder Standardabweichung von einer Anzahl von Blöcken der Blockteilung ohne Abweichungsblöcke, wobei die Anzahl von Blöcken die niedrigsten geschätzten Probevarianzen unter den Blöcken der Blockteilung ohne Abweichungsblöcke aufweist, und
Berechnung einer kontrastbezogenen Varianz von den Blöcken der Blockteilung ohne Abweichungsblöcke;
Berechnung einer Funktion der rauschbezogenen Varianz mit Bezug auf den Pixelwert, und/oder einer Funktion der rauschbezogenen Standardabweichung mit Bezug auf den Pixelwert; und Berechnung einer Funktion der kontrastbezogenen Varianz mit Bezug auf den Pixelwert.

4. Das Echtzeit-Videoverabeitungssystem (704) nach Anspruch 1, wobei das Bewegungsnachweismodul $P_{Rauschen}$ und $P_{Bewegung}$ wie folgt berechnet:

$$P_{noise_{i,j}} = \prod_{k=1}^{K} f_1\left(\left(n(i,j,t)_k - n(i,j,t-1)_k\right), q\sigma(L)\right)$$

$$P_{motion_{i,j}} = \sum_{k=1}^{K} f_2\left(\left(n(i,j,t)_k - n(i,j,t-1)_k\right), \alpha C(L)\right)$$

wobei
$f_1$ und $f_2$ Funktionen sind, die die Wahrscheinlichkeit berechnen, dass ein Pixel-Wert-Unterschied größer ist als die auf den statistischen Parametern basierenden Schwellen $q\sigma(L)$ und $\alpha C(L)$.

5. Das Echtzeit-Videoverabeitungssystem (704) nach Anspruch 1, wobei das Verarbeitungsmodul (810) ein adaptiv-temporales Verarbeitungsmodul umfasst, wobei das adaptiv-temporale Verarbeitungsmodul einen Verlaufrahmen $H$ hält, der einen rekursiv erzeugten Ablauf von vorherigen verbesserten Rahmen (2712, 2904) darstellt, ausgegeben vom adaptiv-temporalen Verarbeitungsmodul, wobei der Ablaufrahmen wie folgt definiert ist:

$$H = \sum_{t=x-1}^{0} f(E_t)$$

wobei $E_t$ der verbesserte Rahmen (2712, 2904) ist, der dem Videorahmen zum Zeitpunkt $t$ im Videostrom entspricht; und
$f$ () eine Funktion ist, die einen Wert für jedes Pixel in einem verbesserten Rahmen (2712, 2904) rückführt.

6. Echtzeit-Videoverabeitungssystem (704) nach Anspruch 5, wobei das adaptiv-temporale Verarbeitungsmodul eine temporale Verarbeitung auf jedem räumlich verarbeiteten Rahmen durchführt, um einen entsprechenden verbesserten Rahmen (2712, 2904) zu erzeugen durch:

für jedes Pixel $(i, j)$ im räumlich verarbeiteten Rahmen,
Berechnung des Werts des entsprechenden Pixels des verbesserten Rahmens, $E_{i,j}$ als

$$E_{i,j} = \omega_{i,j}\, I\,(i,\ j)\ +\ (1 - \omega_{i,\ j})\ H(i,\ j)$$

7. Echtzeit-Videoverabeitungssystem (704) nach Anspruch 6, wobei nach der Berechnung eines nächsten verbesserten Rahmens $E_t$ (2712, 2904), der einem räumlich verarbeiteten Rahmen entspricht, der zum Zeitpunkt $t$ im Eingangsstrom (702) von Videorahmen auftritt, das Echtzeit-Videoverabeitungssystem (704) den gegenwärtigen Verlaufsrahmen $H$ durch den nächsten verbesserten Rahmen $E_t$ (2712, 2904) ersetzt.

8. Echtzeit-Videoverabeitungssystem (704) nach Anspruch 1, wobei im nachbarschaftsbasierten Vorgang jedes Pixels $(i, j)$ im räumlich verarbeiteten Rahmen, das zum Zeitpunkt $t$ im Strom (702) von Videorahmen in der Nachbarschaft n($i, j, t$) auftritt, berücksichtigt wird durch
Berechnung einer Größe des Unterschieds zwischen jedem Pixel k in der Nachbarschaft n(i, j, t), n(i, j, t)$_k$ und einem entsprechenden Pixel k im Ablauf H(i, j, t -l)$_k$ berechnet zum Zeitpunkt t - 1 im Strom (702) von Videorahmen und unmittelbar vor dem räumlich verarbeiteten Rahmen, der zum Zeitpunkt t im Strom (702) von Videorahmen auftritt,
Berechnung, aus den berechneten Größen zwischen den entsprechenden Pixeln in der Nachbarschaft n(i, j, t) und dem Ablauf H(i, j, t-1), einer Wahrscheinlichkeit, dass der Wert von Pixel (i, j) durch das Rauschen beeinflusst wird, $P_{Rauschen}$, und einer Wahrscheinlichkeit, dass der Wert von Pixel $(i, j)$ durch die Bewegung beeinflusst wird, $P_{Bewegung}$, und

Berechnung von $\omega_{i,j}$ als proportional zum Verhältnis $\dfrac{P_{noise}}{P_{motion}}$.

**9.** Echtzeit-Videoverabeitungssystem (704) nach Anspruch 8, wobei das Bewegungsnachweismodul $P_{Rauschen}$ und $P_{Bewegung}$ wie folgt berechnet:

$$P_{noise_{i,j}} = \prod_{k=1}^{K} f_1\left(\left(n(i,j,t)_k - n(i,j,t-1)_k\right), q\sigma(L)\right)$$

$$P_{motion_{i,j}} = \sum_{k=1}^{K} f_2\left(\left(n(i,j,t)_k - n(i,j,t-1)_k\right), \alpha C(L)\right)$$

wobei
$f_1$ und $f_2$ Funktionen sind, die die Wahrscheinlichkeit berechnen, dass ein Pixel-Wert-Unterschied größer als die auf den statistischen Parametern basierenden Schwellen $q\sigma$(L) und $\alpha C$(L) ist.

**10.** Echtzeit-Videoverabeitungssystem (704) nach Anspruch 7, wobei das Bewegungs-Nachweismodul und das adaptiv-temporale Verarbeitungsmodul eines sind von:

getrennten Modulen; und
Funktionalität innerhalb eines einzigen temporalen Verarbeitungsmoduls.

**11.** Echtzeit-Videoverabeitungssystem (704) nach Anspruch 7, wobei das mehrstufige Entrauschungs-, Schärfungs- und Kontrastverbesserungs-Modul (806) eines ist von:

einem getrennten Modul;
Funktionalität innerhalb eines einzigen Verarbeitungsmoduls (810).

**12.** Verfahren zur Verbesserung eines Eingangsstroms (702) von Videorahmen, wobei das Verfahren folgendes umfasst:

auf einem oder mehreren Hauptprozessoren (402) eines Computersystems, Erzeugung, aus ausgewählten Rahmen des Eingabestroms (702) von Videorahmen, einer oder mehrerer Funktionen von rauschbezogenen Statistiken mit Bezug auf jeden Pixelwert;
auf einem oder mehreren graphischen Prozessoreinheiten des Computersystems, Verwendung des einen oder der mehreren Funktionen von rauschbezogenen Statistiken mit Bezug auf jeden Pixelwert, um jeden Rahmen des Eingabestroms (702) von Videorahmen zu verarbeiten, inklusive der Entrauschung, Schärfung, Kontrastverbesserung und Scharfstellung jedes Rahmens, um einen Strom (706) von verbesserten Rahmen (2712, 2904) für die Speicherung, Übertragung und/oder Anzeige auszugeben;
auf jeder der einen oder der mehreren gegenwärtig berücksichtigten Auflösungsstufen, größer als die niedrigste Auflösungsstufe,
Abwärtsskalieren entweder des Eingaberahmens oder eines Zwischenrahmens, abgeleitet vom Eingaberahmen, um einen Zwischenrahmen für die Eingabe in eine Stufe mit der nächst-niedrigeren Auflösung zu erzeugen,
Aufwärtsskalieren eines Zwischenrahmens, erhalten von einer Stufe mit einer niedrigeren Auflösung, um einen Zwischenrahmen zu erzeugen, um an eine Stufe mit der nächst-höheren Auflösung auszugeben, und
Filtern mindestens eines des Eingaberahmens oder des Zwischenrahmens, unter Verwendung der Funktion der rauschbezogenen Varianz mit Bezug auf den Pixelwert, oder der Funktion der rauschbezogenen Standardabweichung mit Bezug auf den Pixelwert, um rauschbezogene Schwellen zu berechnen,
wobei der Faktor $\omega_{i,j}$ für jedes Pixel in jedem räumlich verarbeiteten Rahmen erzeugt wird durch:

in einem nachbarschaftsbasierten Vorgang, Berücksichtigung jedes Pixels (*i, j*) im räumlich verarbeiteten Rahmen, das zum Zeitpunkt *t* im Strom (702) von Videorahmen in der Nachbarschaft *n(i, j, t)* auftritt durch Berechnung einer Größe des Unterschieds zwischen jedem Pixel *k* in der Nachbarschaft *n(i, j, t)*, $n(i, j, t)_k$

und eines entsprechenden Pixels *k* in der Nachbarschaft $n(i, j, n\,t$ - $1)_k$ des räumlich verarbeiteten Rahmens, das zum Zeitpunkt *t* - 1 im Strom (702) von Videorahmen und unmittelbar vor dem räumlich verarbeiteten Rahmen auftritt, der zum Zeitpunkt *t* im Strom (702) von Videorahmen auftritt,

Berechnung, aus den berechneten Größen zwischen den entsprechenden Pixeln in der Nachbarschaft *n* (*i, j, t*) und der Nachbarschaft *n*(*i, j, t-1*), einer Wahrscheinlichkeit, dass der Wert von Pixel (*i, j*) durch das Rauschen beeinflusst wird, P*Rauschen*,

und einer Wahrscheinlichkeit, dass der Wert von Pixel (*i, j*) durch die Bewegung beeinflusst wird, P*Bewegung*, und

Berechnung von $\omega_{i,j}$ als proportional zum Verhältnis $\dfrac{P_{noise}}{P_{motion}}$

wobei $\omega_{i,\,j}$ verwendet wird, um den Wert jedes Pixels (*i, j*) im entsprechenden verbesserten Rahmen zu berechnen.

## Revendications

1. Système de traitement vidéo en temps réel (704) apte à recevoir un flux d'entrée (702) de trames vidéo et à émettre un flux (706) de trames améliorées (2712, 2904) pour un stockage, une transmission et/ou une restitution pour un affichage, le système de traitement vidéo en temps réel (704) comprenant :

   un module de mesure (804), exécuté sur une ou plusieurs unités centrales de traitement (402) d'un système informatique, qui génère, à partir de trames sélectionnées du flux d'entrée (702) de trames vidéo, une ou plusieurs fonctions de statistiques apparentées au bruit par rapport à chaque valeur de pixel ; et
   un module de traitement (810), s'exécutant sur une ou plusieurs unités de processeur graphique d'un système informatique, qui comprend un module de débruitage, d'amélioration de netteté et d'amélioration de contraste multi-échelle (806) qui emploient la ou les fonctions de statistiques apparentées au bruit par rapport à chaque valeur de pixel, générées par le module de mesure (804), pour traiter chaque trame (802, 812, 813, 902, 2406, 2412, 2702, 2706, 2804, 2906) du flux d'entrée (702) de trames vidéo, comprenant le débruitage, l'amélioration de netteté, l'amélioration de contraste et le défloutage de chaque trame (802, 812, 813, 902, 2406, 2412, 2702, 2706, 2804, 2906), afin d'émettre le flux (706) de trames améliorées (2712, 2904) par :

      à chacune d'une ou plusieurs échelles de résolution actuellement prises en compte supérieures à une échelle de résolution la plus basse,
      la réduction de résolution (1408) soit de la trame d'entrée (1302) soit d'une trame intermédiaire (1406) dérivée de la trame d'entrée (1402) pour produire une trame intermédiaire (1406) pour une entrée à une échelle de résolution inférieure suivante,
      l'augmentation de résolution (2322, 2323) d'une trame intermédiaire (2332) reçue à partir d'une échelle de résolution inférieure pour produire une trame intermédiaire pour émettre à une échelle de résolution supérieure suivante, et
      le filtrage (2310) d'au moins l'une des trames d'entrée (2302) ou de trames intermédiaires, à l'aide de la fonction de variance apparentée au bruit par rapport à une valeur de pixel ou de la fonction d'écart-type apparentée au bruit par rapport à une valeur de pixel pour calculer des seuils apparentés au bruit,

   le module de traitement (810) comprenant en outre un module de détection de mouvement (808), le module de détection de mouvement (808) générant un facteur $\omega_{i,j}$ pour chaque pixel dans chaque trame traitée spatialement générée par le module de débruitage, d'amélioration de netteté et d'amélioration de contraste multi-échelle (806) par :

      dans une opération basée sur un voisinage, la prise en compte de chaque pixel (*i, j*) (506, 2404, 2908) dans la trame traitée spatialement se produisant à un instant *t* dans le flux (702) de trames vidéo à l'intérieur d'un voisinage *n*(*i, j, t*) (504, 508, 1802, 2402, 2907) par
      calcul d’une amplitude de la différence entre chaque pixel *k* dans le voisinage *n*(*i, j, t*), $n(i, j, t)_k$, et un pixel correspondant *k* (2410) dans le voisinage $n(i, j, t\text{-}1)_k$ (2408) de la trame traitée spatialement se produisant à l'instant *t*-1 dans le flux (702) de trames vidéo et précédant immédiatement la trame traitée spatialement se produisant à l'instant t dans le flux (702) de trames vidéo,
      calcul, à partir des amplitudes calculées entre les pixels correspondant dans le voisinage *n*(*i, j, t*) et le voisinage

$n(i, j, t\text{-}1)$, d'une probabilité que la valeur de pixel $(i, j)$ soit influencée par du bruit, $P_{bruit}$, et d'une probabilité que la valeur de pixel $(i, j)$ soit influencée par le mouvement, $P_{mouvement}$, et

calcul d'$\omega_{i,j}$ en tant que proportionnel au rapport $\dfrac{P_{bruit}}{P_{mouvement}}$ , $\omega_{i,j}$ étant utilisé pour calculer la valeur de chaque pixel $(i, j)$ dans la trame améliorée correspondante.

2. Système de traitement vidéo en temps réel (704) selon la revendication 1, dans lequel le module de mesure (804) sélectionne des trames à partir desquelles générer la ou les fonctions de statistiques apparentées au bruit par rapport à chaque valeur de pixel par l'une quelconque parmi :

> la sélection de chaque trame (812, 183) qui se produit à l'intérieur du flux d'entrée (702) de trames vidéo à un intervalle de trame fixe ;
> la sélection de chaque trame (812, 813) qui se produit à l'intérieur du flux d'entrée (702) de trames vidéo à un intervalle de temps fixe ;
> la sélection de chaque trame qui se produit à l'intérieur du flux d'entrée (702) de trames vidéo à un intervalle de trame variable ; et
> la sélection de chaque trame qui se produit à l'intérieur du flux d'entrée (702) de trames vidéo à un intervalle de temps variable.

3. Système de traitement vidéo en temps réel (704) selon la revendication 1, dans lequel le module de mesure (804) génère, à partir de trames sélectionnées du flux d'entrée (702) de trames vidéo, une ou plusieurs fonctions de statistiques apparentées au bruit par rapport à chaque valeur de pixel par :

> la génération (3102) de blocs de pixels à partir de la trame ;
> le calcul (3105) d'une valeur de pixel moyenne et d'une variance d'échantillon estimée pour chaque bloc ;
> le partitionnement (3107) des blocs en partitions, chaque partition étant associée à une valeur de pixel moyenne différente ;
> pour chaque partition,
> le retrait de blocs aberrants sur la base de variances d'échantillon estimées pour produire une partition de bloc sans blocs aberrants,
> le calcul d'une variance estimée apparenté au bruit et/ou d'un écart-type apparenté au bruit à partir d'un nombre de blocs de la partition de bloc sans blocs aberrants, le nombre de blocs ayant les variances d'échantillon estimées les plus basses parmi les blocs de la partition de bloc sans blocs aberrants, et
> le calcul d'une variance apparentée au contraste à partir des blocs de la partition de bloc sans blocs aberrants ;
> le calcul d'une fonction de variance apparentée au bruit par rapport à une valeur de pixel et/ou d'une fonction d'écart-type apparentée au bruit par rapport à une valeur de pixel ; et
> le calcul d'une fonction de variance apparentée au contraste par rapport à une valeur de pixel.

4. Système de traitement vidéo en temps réel (704) selon la revendication 1, dans lequel le module de détection de mouvement calcule $P_{bruit}$ et $P_{mouvement}$ en tant que :

$$P_{bruit_{i,j}} = \prod_{k-1}^{K} f_1\big(\big(n(i,j,t)_k\big) - n(i,j,t-1)_k\big), q\sigma(L)\big)$$

$$P_{mouvement} = \sum_{k=1}^{K} f_2\big(\big(n(i,j,t)_k - n(i,j,t-1)_k\big), \alpha C(L)\big)$$

où

$f_1$ et $f_2$ sont des fonctions qui calculent la probabilité qu'une différence de valeur de pixel soit supérieure à des seuils basés sur des paramètres statistiques $q\sigma(L)$ et $\alpha C(L)$.

5. Système de traitement vidéo en temps réel (704) selon la revendication 1, dans lequel le module de traitement (810) comprend un module de traitement temporel adaptatif, le module de traitement temporel adaptatif concernant une trame d'historique *H* qui représente un historique généré de manière récursive de trames améliorées précédemment (2712, 2904) émises par le module de traitement temporel adaptatif, la trame d'historique étant définie en tant que :

$$H = \sum_{t-x-1}^{0} f(E_t)$$

où

$E_t$ est la trame améliorée (2712, 2904) correspondant à la trame vidéo à l'instant t dans le flux vidéo ; et
$f$ ( ) est une fonction qui renvoie une valeur pour chaque pixel dans une trame améliorée (2712, 2904).

6. Système de traitement vidéo en temps réel (704) selon la revendication 5, dans lequel le module de traitement temporel adaptatif réalise un traitement temporel sur chaque trame traitée spatialement pour produire une trame améliorée correspondante (2712, 2904) par :

pour chaque pixel (*i, j*) dans la trame traitée spatialement,
calcul de la valeur du pixel de trame améliorée correspondant $E_{i,j}$ en tant que

$$E_{i,j} = \omega_{i,j} I(i,j) + (1 - \omega_{i,j}) H(i,j)$$

7. Système de traitement vidéo en temps réel (704) selon la revendication 6, dans lequel, à la suite du calcul d'une trame améliorée suivante $E_t$ (2712, 2904) correspondant à une trame traitée spatialement se produisant à l'instant *t* dans le flux d'entrée (702) de trames vidéo, le système de traitement vidéo en temps réel (704) remplace la trame d'historique courante *H* par la trame améliorée suivante $E_t$ (2712, 2904).

8. Système de traitement vidéo en temps réel (704) selon la revendication 1, dans lequel, dans l'opération basée sur un voisinage, chaque pixel (*i, j*) dans la trame traitée spatialement se produisant à l'instant *t* dans le flux (702) de trames vidéo à l'intérieur du voisinage *n(i, j, t)* est considéré par
calcul d'une amplitude de la différence entre chaque pixel *k* dans le voisinage *n(i, j, t)*, *n(i, j, t)ₖ*, et un pixel correspondant *k* dans *H(i, j, t-*1*)ₖ* d'historique calculé à l'instant *t-*1 dans le flux (702) de trames vidéo et précédant immédiatement la trame traitée spatialement se produisant à l'instant *t* dans le flux (702) de trames vidéo,
calcul, à partir des amplitudes calculées entre les pixels correspondants dans le voisinage *n(i, j, t)* et *H(i, j, t-*1*)* d'historique, d'une probabilité que la valeur de pixel (*i, j*) soit influencée par du bruit, $P_{bruit}$, et d'une probabilité que la valeur de pixel (*i, j*) soit influencée par le mouvement, $P_{mouvement}$, et

calcul de $\omega_{i,j}$ en tant que proportionnel au rapport $\dfrac{P_{bruit}}{P_{mouvement}}$ .

9. Système de traitement vidéo en temps réel (704) selon la revendication 8, dans lequel le module de détection de mouvement calcule $P_{bruit}$ et $P_{mouvement}$ en tant que :

$$P_{bruit_{i,j}} = \prod_{k-1}^{K} f_1 \big( (n(i,j,t)_k - n(i,j,t-1)_k), q\sigma(L) \big)$$

$$P_{mouvement_{i,j}} = \sum_{k=1}^{K} f_2 \big( (n(i,j,t)_k - n(i,j,t-1)_k), \alpha C(L) \big)$$

où

$f_1$ et $f_2$ sont des fonctions qui calculent la probabilité qu'une différence de valeur de pixel soit supérieure à des seuils basés sur des paramètres statistiques $q\sigma(L)$ et $\alpha C(L)$.

10. Système de traitement vidéo en temps réel (704) selon la revendication 7, dans lequel le module de détection de mouvement et le module de traitement temporel adaptatif sont l'un parmi :

   des modules séparés ; et
   une fonctionnalité à l'intérieur d'un module de traitement temporel unique.

11. Système de traitement vidéo en temps réel (704) selon la revendication 7, dans lequel le module de débruitage, d'amélioration de netteté et d'amélioration de contraste multi-échelle (806) est l'un parmi :

   un module séparé ; et
   une fonctionnalité à l'intérieur d'un module de traitement unique (810).

12. Procédé pour améliorer un flux d'entrée (702) de trames vidéo, le procédé comprenant :

   une ou plusieurs unités centrales de traitement (402) d'un système informatique, générant, à partir de trames sélectionnées du flux d'entrée (702) de trames vidéo, une ou plusieurs fonctions de statistiques apparentées au bruit par rapport à chaque valeur de pixel ;
   une ou plusieurs unités de processeur graphiques du système informatique, employant la ou les fonctions de statistiques apparentées au bruit par rapport à chaque valeur de pixel pour traiter chaque trame du flux d'entrée (702) de trames vidéo, comprenant le débruitage, l'amélioration de netteté, l'amélioration de contraste et le défloutage de chaque trame, afin d'émettre un flux (706) de trames améliorées (2712, 2904) pour un stockage, une transmission, et/ou une restitution pour un affichage ;
   à chacune d'une ou plusieurs échelles de résolution actuellement prises en compte supérieures à une échelle de résolution la plus basse,
   la diminution d'échelle soit de la trame d'entrée soit d'une trame intermédiaire dérivée de la trame d'entrée pour produire une trame intermédiaire pour une entrée à une échelle de résolution inférieure suivante,
   l'augmentation d'échelle d'une trame intermédiaire reçue à partir d'une échelle de résolution inférieure pour produire une trame intermédiaire pour une émission à une échelle de résolution supérieure suivante, et
   le filtrage d'au moins l'une de la trame d'entrée ou des trames intermédiaires, à l'aide de la fonction de variance apparentée au bruit par rapport à une valeur de pixel ou de la fonction d'écart-type apparentée au bruit par rapport à une valeur de pixel pour calculer des seuils apparentés au bruit,
   un facteur $\omega_{i,j}$ pour chaque pixel dans chaque trame traitée spatialement étant généré par :
   dans une opération basée sur un voisinage, la prise en compte de chaque pixel $(i, j)$ dans la trame traitée spatialement se produisant à l'instant $t$ dans le flux (702) de trames vidéo à l'intérieur du voisinage $n(i, j, t)$ par calcul de l'amplitude de la différence entre chaque pixel $k$ dans le voisinage $n(i, j, t)$, $n(i, j, t)_k$, et un pixel correspondant $k$ dans le voisinage $n(i, j, t\text{-}1)_k$ de la trame traitée spatialement se produisant à l'instant $t$-1 dans le flux (702) de trames vidéo et précédant immédiatement la trame traitée spatialement se produisant à l'instant $t$ dans le flux (702) de trames vidéo,
   calcul, à partir des amplitudes calculées entre les pixels correspondants dans le voisinage $n(i, j, t)$ et le voisinage $n(i, j, t\text{-}1)$, d'une probabilité que la valeur de pixel $(i, j)$ soit influencée par le bruit, $P_{bruit}$, et d'une probabilité que la valeur de pixel $(i, j)$ soit influencée par le mouvement, $P_{mouvement}$, et

   calcul de $\omega_{i,j}$ en tant que proportionnel au rapport $\dfrac{P_{bruit}}{P_{mouvement}}$, $\omega_{i,j}$ étant utilisé pour calculer la valeur de chaque pixel $(i, j)$ dans la trame améliorée correspondante.

Figure 1

202   Y(2,8) = 97

| 0 | 0 | 0 | 0 | 0 | 5 | 5 | 5 | 5 | 5 | 5 | 0 | 0 | 0 | 0 | 0 | 0 |
|---|---|---|---|---|---|---|---|---|---|---|---|---|---|---|---|---|
| 0 | 0 | 0 | 0 | 5 | 10 | 15 | 16 | 14 | 10 | 5 | 5 | 0 | 0 | 0 | 0 | 0 |
| 0 | 0 | 0 | 5 | 15 | 81 | 95 | 91 | 97 | 76 | 17 | 5 | 5 | 0 | 0 | 0 | 0 |
| 0 | 0 | 0 | 10 | 80 | 96 | 46 | 40 | 47 | 91 | 73 | 10 | 5 | 0 | 0 | 0 | 0 |
| 0 | 0 | 0 | 16 | 95 | 50 | 10 | 11 | 87 | 49 | 93 | 10 | 5 | 0 | 0 | 0 | 0 |
| 0 | 0 | 0 | 11 | 98 | 34 | 9 | 8 | 8 | 43 | 94 | 19 | 5 | 0 | 0 | 0 | 0 |
| 0 | 0 | 0 | 10 | 91 | 41 | 7 | 6 | 6 | 45 | 95 | 18 | 5 | 0 | 0 | 0 | 0 |
| 0 | 0 | 0 | 5 | 81 | 90 | 45 | 44 | 43 | 98 | 79 | 10 | 5 | 0 | 0 | 0 | 0 |
| 0 | 0 | 0 | 5 | 16 | 79 | 93 | 95 | 97 | 80 | 20 | 5 | 0 | 0 | 0 | 0 | 0 |
| 0 | 0 | 0 | 5 | 5 | 10 | 16 | 17 | 13 | 10 | 5 | 0 | 0 | 0 | 0 | 0 | 0 |
| 0 | 0 | 0 | 0 | 5 | 5 | 5 | 5 | 5 | 5 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 | 0 |

# Figure 2

Figure 3A

contrast enhancement

Figure 3B

310

316

EP 2 294 808 B1

Figure 3C

sharpening

320

322 324 326

322 324 328 330 332

Figure 3D

EP 2 294 808 B1

EP 2 294 808 B1

deblurring

Figure 3E

350

352

Figure 4

Figure 5

Figure 6A

Figure 6B

704

$\dfrac{1}{30}$ second

Spatial denoising, sharpening, and contrast enhancement and temporal processing, including deblurring

702

706

Figure 7

EP 2 294 808 B1

Figure 8

Figure 9

EP 2 294 808 B1

Figure 10

EP 2 294 808 B1

12

5.1

4.8

5.2

4.6

1104

4

interpolation
&
smoothing

3.5

3

2.5

2

10

1102

0

255

Figure 11

1106

Figure 12

Figure 13

Y'

1410

1408

½ x ½ downscale

Y*

1406

D

convolution with W

1404

Y

1402

Figure 14

1502

| c | b | a | b | c |
|---|---|---|---|---|
| -2 | -1 | 0 | 1 | 2 |

$W(m)$

|    | -2 | -1 | 0 | 1 | 2 |
|----|-----|-----|-----|-----|-----|
| -2 | $c^2$ | $bc$ | $ac$ | $bc$ | $c^2$ |
| -1 | $bc$ | $b^2$ | $ab$ | $b^2$ | $bc$ |
| 0  | $ac$ | $ab$ | $a^2$ | $ab$ | $ac$ |
| 1  | $bc$ | $b^2$ | $ab$ | $b^2$ | $bc$ |
| 2  | $c^2$ | $bc$ | $ac$ | $bc$ | $c^2$ |

$W(m,n) = W(m)W(n)$

1504

$W$

$$\sum_{m=-2}^{2} W(m) = 1$$

$$\forall Y(i,j), \sum_{Y^*} W(m,m)Y(i,j) = \frac{1}{4} - a + 2c = 2b$$

$$W(x) = W(-x)$$

1530

| $\frac{1}{4}-\frac{a}{2}$ | $\frac{1}{4}$ | $a$ | $\frac{1}{4}$ | $\frac{1}{4}-\frac{a}{2}$ |
|---|---|---|---|---|

# Figure 15

Figure 16

EP 2 294 808 B1

$$G^n(i,j) = 4\sum_{m=-2}^{2}\sum_{n=-2}^{2} W(m,n)G^{n+1}\left(\frac{i-m}{2},\frac{j-n}{2}\right)$$

Figure 17

Figure 18

1906

$$d_s n(i,j)$$

$$d_1 = Y(i,j) - Y(i-1,j-1)$$
$$d_2 = Y(i,j) - Y(i-1,j)$$
$$d_3 = Y(i,j) - Y(i-1,j+1)$$
$$d_4 = Y(i,j) - Y(i,j+1)$$
$$d_5 = Y(i,j) - Y(i+1,j+1)$$
$$d_6 = Y(i,j) - Y(i+1,j)$$
$$d_7 = Y(i,j) - Y(i+1,j-1)$$
$$d_8 = Y(i,j) - Y(i,j-1)$$

$Y_s(i-1,j-1)$  $Y_s(i-1,j)$  $Y_s(i-1,j+1)$

$d1$  $d2$  $d3$

$Y_s(i,j-1)$  $d8$  $Y_s(i,j)$  $d4$  $Y_s(i,j+1)$

$d7$  $d6$  $d5$

$Y_s(i+1,j-1)$  $Y_s(i+1,j)$  $Y_s(i+1,j+1)$

1902

1904

$\Delta_{max}$
$\Delta_{max-1}$
$\Delta_{max-2}$
$\Delta_{max-3}$
$\Delta_{max-4}$

$\varphi_s(dn)$

$dn$

$\Delta_8$
$\Delta_7$
$\Delta_6$
$\Delta_5$
$\Delta_4$
$\Delta_3$
$\Delta_2$
$\Delta_1$
$0$

$$f_s(i,j) = \sum_{n=1}^{8} \phi_s(d_n)$$

1908

LUT

## Figure 19

Figure 20

Figure 21

EP 2 294 808 B1

$$\hat{Y} = \Psi_s(Y)$$

$$Y_{s+1}^{\bullet} = D_{s(y_1,y_2)}(Y_s \otimes W_s)$$

$$Y_{s-1}^{\bullet} = \left(\in_{(y_1,y_2)}(Y_s)\right) \otimes W_{s+1}$$

$$Y' = Y_1 + Y_2$$

$$Y' = Y_1 - Y_2$$

Figure 22

Figure 23

Figure 24

Figure 25

EP 2 294 808 B1

$I_x$

2602

$$H = \sum_{t=x-1}^{0} f(E_t)$$

2604

## Figure 26

EP 2 294 808 B1

Figure 27

Figure 28

$$\omega = f\left(P_{noisy} / P_{motion}\right)$$

$$E_{j,y} = \omega I_x(i,j) + (1-\omega)H(i,j)$$

$n(i,j,t)$

$n(i,j,H)$

$I_x$

2906

2908

2907

$H$

2410

2912

$E_x$

2902

2904

Figure 29

video processing

set stream = stream of
input video frames
set H = stream[0]
set $n$ = 0
set interval

3002

for each input frame, in
time order

3004

3005

$n$ MOD interval
==0
?

3006

compute $\sigma(L)$,
C(L), and q

multi-scale
sharpen, enhance,
and denoise

3007

motion detection

3008

adaptive temporal
processing

3009

output result frame;
$n$ + = 1

3010

3011

more
frames
?

return

Figure 30

compute σ(L), C(L), and q

block received frame

block frame — 3102

for each block — 3104

compute $s^2$ and $\bar{l}$ — 3105

more blocks ? — 3106

partition blocks by and order by $s^2$ — 3107

for each $l$ — 3108

more than threshold num blocks in partition ? — 3109

compute $\hat{\sigma}^2$ and / or σ for lowest $s^2$ blocks, $\hat{\sigma}^2$ for all blocks, and q$l$ — 3110

more partitions ? — 3111

return

compute smoothed $\sigma^2(L)$ and C(L) function as well as qL — 3112

# Figure 31

Figure 32

**Figure 33**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GUPTA.** temporally-adaptive MAP estimation for video denoising in the wavelet domain. *proceedings of the IEEE International Conference on Image processing,* 2006